# EUROPÄISCHE PATENTANMELDUNG

(11) **EP 3 290 820 A1**
(43) Veröffentlichungstag der Anmeldung: **07.03.2018**
(21) Anmeldenummer: 16187357.5
(22) Anmeldetag: 06.09.2016
(51) Int. Cl.: F24H 1/00, B60H 1/22, F24H 1/12, F24H 9/18

(54) **ELEKTRISCHE HEIZEINRICHTUNG**

(71) Anmelder: Mahle International GmbH, 70376 Stuttgart (DE)
(72) Erfinder: Cmelik, Alain, 68760 Willer-sur-Thur (FR); Kohl, Michael, 74321 Bietigheim-Bissingen (DE); Krumbach, Karl-Gerd, 71576 Burgstetten (DE); Seewald, Wolfgang, 71732 Tamm (DE)
(74) Vertreter: Grauel, Andreas

(57) **Zusammenfassung**

Die Erfindung betrifft eine elektrische Heizeinrichtung (1, 100, 200, 300) mit einem Gehäuse (2, 101, 201, 301, 303) mit einem Fluideinlass (3, 103, 203, 304) und mit einem Fluidauslass (4, 104, 204, 305), wobei das Gehäuse (2, 101, 201, 301, 303) von einem Fluid durchströmbar ist und wobei eine Anzahl von Heizelementen (9, 50, 102, 202, 302) in den Innenraum (13, 107, 207) des Gehäuses (2, 101, 201, 301, 303) ragt, wobei die Heizelemente (9, 50, 102, 202, 302) ein Heizelementgehäuse (11, 51) aufweisen und wobei ein Heizelement (9, 50, 102, 202, 302) in dem Heizelementgehäuse (11, 51) zumindest ein Heizmittel (19, 56, 320) und das zumindest eine Heizmittel (19, 56, 320) kontaktierende Kontaktelemente (12, 55, 314) und eine elektrische Isolierung (20, 57, 315) zur Isolierung der Kontaktelemente (12, 55, 314) gegenüber dem Heizelementgehäuse (11, 51) aufweist, wobei die Kontaktelemente (12, 55, 314) aus dem Heizelement (9, 50, 102, 202, 302) herausragen und wobei die Heizelemente (9, 50, 102, 202, 302) mit ihrem Heizelementgehäuse (11, 51) mit dem Gehäuse (2, 101, 201, 301, 303) abdichtend verbunden sind, wobei die Heizelemente (9, 50, 102, 202, 302) derart angeordnet sind, dass sie in einer Strömungsrichtung des Fluids vom Fluideinlass (3, 103, 203, 304) zum Fluidauslass (4, 104, 204, 305) einseitig oder beidseitig von dem Fluid umströmbar sind.

## Beschreibung

### Technisches Gebiet

Die Erfindung betrifft eine elektrische Heizeinrichtung, insbesondere zur Beheizung eines Innenraums eines Kraftfahrzeugs.

### Hintergrund der Erfindung

Kraftfahrzeuge weisen üblicherweise einen beheizbaren Innenraum auf. Dazu weisen Kraftfahrzeuge mit Verbrennungsmotor üblicherweise einen im Kühlkreislauf angeschlossenen Heizungswärmeübertrager auf, durch welchen heißes Kühlmittel strömt, das vom Verbrennungsmotor erwärmt wird. Dadurch kann die durch den Heizungswärmeübertrager strömende Luft erwärmt und dem Innenraum zugeführt werden.

Insbesondere Kraftfahrzeuge mit verbrauchsarmen Verbrennungsmotoren, die weniger Abwärme erzeugen, und Kraftfahrzeuge mit Plug-In/Range Extender benötigen für die Innenraumbeheizung Zuheizeinrichtungen. Kraftfahrzeuge mit Elektroantrieb benötigen Heizeinrichtungen, da eine Erwärmung mit vom Verbrennungsmotor erwärmtem Kühlmittel ausfällt, weil sie keinen Verbrennungsmotor aufweisen.

Dabei ist vor allem in der Startphase und/oder bei geringen Außentemperaturen ein Zuheizen bzw. ein Heizen erwünscht oder notwendig.

Hierfür sind verschiedene Heizeinrichtungen bzw. Zuheizeinrichtungen bekannt geworden, wie beispielsweise elektrische Zuheizeinrichtungen, Wärmepumpeneinrichtungen, Brennstoffheizer, sowie eine Zuheizung mittels Abgas-Wärmeübertragern.

Die elektrische Zuheizung hat den Vorteil, dass die dafür notwendigen elektrischen Heizeinrichtungen relativ kostengünstig sind im Vergleich zu anderen Lösungen und dass die erzeugte Wärme relativ spontan spürbar ist, weil die elektrische Leistung quasi sofort in spürbare Wärme umgesetzt wird. Weiterhin sind elektrische Heizeinrichtungen platzsparend und damit in einem Kraftfahrzeug flexibel einbaubar.

Für hybridisierte Fahrzeuge oder rein elektrisch betriebene Fahrzeuge ist der Stellenwert der elektrischen Heizung bzw. Zuheizung noch größer, da eine Erwärmung über Abwärme des Verbrennungsmotors nicht möglich ist. Bei solchen Kraftfahrzeugen werden elektrische Leistungen von etwa mehr als 3kW benötigt. Dies bedeutet auch, dass eine hohe Leistungsdichte vorteilhaft ist. Bei solchen Kraftfahrzeugen liegt die Bordnetzspannung meist über 60 Volt, teilweise sogar über 300 Volt. Aufgrund der hohen geforderten Heizleistungen am (Zu-)Heizer wird auch diese elektrische Heizeinrichtung mit der hohen Spannung betrieben, um die im Betrieb auftretende Stromstärke möglichst gering zu halten.

Ein solcher Heizer bzw. Zuheizer als Heizeinrichtung für Hochvoltanwendungen, also für Spannungen über 60 Volt, muss so ausgebildet sein, dass eine Gefährdung durch die Heizeinrichtung im Betrieb oder bei einer Wartung ausgeschlossen werden kann.

Bei den elektrischen Heizeinrichtungen als Zuheizer oder als alleinige Heizer gibt es grundsätzlich die Möglichkeit, dass die elektrische Leistung direkt in ein flüssiges Medium, wie beispielsweise ein Kühlmittel, geleitet wird, welches über einen weiteren Wärmetauscher die Wärme in den Innenraum des Kraftfahrzeugs abgibt. Eine solche Heizeinrichtung wird auch als kühlmittelseitige Heizeinrichtung bezeichnet.

Auch gibt es die Möglichkeit, dass die elektrische Leistung an die Luft abgegeben wird und diese erwärmte Luft für die Beheizung des Innenraums herangezogen wird. Eine solche Heizeinrichtung wird auch als luftseitige Heizeinrichtung bezeichnet.

Die luftseitigen Heizeinrichtungen sind zeitlich spontaner, da die elektrische Energie zu nahezu hundert Prozent in Lufterwärmung umgesetzt wird. Der Wirkungsgrad liegt bei nahezu hundert Prozent. Er kann sinnvollerweise jedoch nur zur Erwärmung des Innenraumes der Fahrzeugkabine eingesetzt werden. Ebenso ist er sinnvollerweise im Fahrzeuginnenraum, also im Klimagerät, integriert. Die Integration einer Hochspannungskomponente im Innenraum ist sicherheitsbedingt jedoch aufwendig und bedeutet in der Regel eine aufwändigere Konstruktion des Klimageräts, was die Kosten erhöht.

Die kühlmittelseitige Heizeinrichtung ist in ihrer Heizwirkung nicht ganz so spontan und effizient, da die elektrische Energie erst genutzt wird, um das Fluid, beispielsweise in einem kleinen Wasserkreislauf, aufzuwärmen. An einem separaten Kühlmittel/Luft-Wärmeübertrager, wie bei einem Kraftfahrzeug mit Verbrennungsmotor, wird das erwärmte Fluid bzw. Wasser genutzt, um die in den Innenraum einströmende Luft zu erwärmen.

Es befindet sich dabei vorzugsweise keine Hochspannungskomponente im Innenraum des Kraftfahrzeugs. Auch ist es bei dieser Konstellation vorteilhaft, dass die kühlmittelseitige Heizeinrichtung an verschiedenen Stellen außerhalb des Innenraums im Kraftfahrzeug angebracht werden kann. Das Klimagerät kann wie bei einem klassischen Kraftfahrzeug genutzt werden, ohne dass große konstruktive Änderungen notwendig werden. Ein weiterer Vorteil der kühlmittelseitigen Heizeinrichtung ist die Möglichkeit, eine Batterie beispielsweise bei einem reinen Elektrofahrzeug durch das warme Wasser bzw. durch das Kühlmittel mit zu beheizen bzw. aufwärmen zu können.

Im Stand der Technik sind verschiedene kühlmittelseitige Heizeinrichtungen bekannt geworden. Die DE 10 2010 060 446 A1 offenbart eine Widerstandsheizeinrichtung mit einer wendelförmigen Heizwendel in einem kühlmitteldurchströmten Gehäuse. In dieser Heizwendel befindet sich ein wiederum wendelförmiger Heizdraht. Der Spannungsabfall bzw. der Stromfluss erfolgt entlang dieses wendelförmig gewickelten Heizdrahtes. Die Konstruktion ist allerdings sehr aufwändig und damit auch in der Herstellung teuer.

Es sind auch Heizeinrichtungen mit PTC-Heizelementen bekannt, die mittels Kontaktelektroden bestromt werden, siehe die EP 1 872 986 A1. Die Heizelemente geben ihre Wärme nur indirekt an das Kühlmittel, da die Heizeinheit bestehend aus Heizelementen und Kontaktelektroden elektrisch isoliert ist. Die Wärme muss dabei zumindest durch die elektrische Isolation aus schlecht thermisch leitenden Materialien und durch das Gehäuse des kühlmittelführenden Kanals, um das Kühlmittel zu erwärmen. Bei dem Gehäuse handelt es sich um einen recht massiven Gusskörper, der U-förmige Ausnehmungen aufweist, die in die Fluidkammern hineinragen. Das Kühlmittel strömt dann um die U-förmigen Ausnehmungen mäanderförmig herum. In diesen Fluidkammern sitzen die Heizelemente, die auf beiden Seiten isoliert sind. Die Heizeinheit bestehend aus PTC-Heizelementen und Kontaktelektroden wird dann mit einem Klemmkeil aus Aluminium in die U-förmigen Ausnehmungen eingepresst. Durch diese Verpressung erfolgen die elektrische Kontaktierung zwischen PTC-Heizelementen und Kontaktelektroden und die thermische Kontaktierung zwischen Heizeinheit und U-förmiger Ausnehmung. Solche Heizeinrichtungen sind auch durch die EP 2 637 475 A1 und durch die EP 2 440 004 B1 bekannt geworden.

Die Heizeinrichtungen gemäß dem Stand der Technik weisen dabei auch Nachteile auf.

Die kühlmitteiseitigen Widerstandsheizer weisen keine Eigensicherheit der Heizeinheit bezüglich einer Temperaturüberhöhung auf. Daher ist eine Temperaturüberwachung und eine entsprechende Abschaltung notwendig, beispielsweise bei einem plötzlichen Stillstand des Kühlmittelvolumenstroms.

Die kühlmittelseitigen PTC-Heizeinrichtungen weisen üblicherweise eine hohe Anzahl an Heizeinheiten auf, die aus 2 Kontaktelektroden und PTC-Heizelementen und Isolationen bestehen. Dadurch resultiert ein eher hoher Montageaufwand. Durch die Gussgehäuse resultieren schwere und große Ausführungen.

### Darstellung der Erfindung, Aufgabe, Lösung, Vorteile

Es ist die Aufgabe der Erfindung, eine elektrische Heizeinrichtung zu schaffen, die gegenüber dem Stand der Technik einfach und kostengünstig herzustellen ist und dennoch gegenüber dem Stand der Technik verbessert ist.

Die Aufgabe wird mit den Merkmalen von Anspruch 1 gelöst.

Ein Ausführungsbeispiel der Erfindung betrifft eine elektrische Heizeinrichtung mit einem Gehäuse mit einem Fluideinlass und mit einem Fluidauslass, wobei das Gehäuse von einem Fluid durchströmbar ist und wobei eine Anzahl von Heizelementen in den Innenraum des Gehäuses ragt, wobei die Heizelemente ein Heizelementgehäuse aufweisen und wobei ein Heizelement in dem Heizelementgehäuse zumindest ein Heizmittel und das zumindest eine Heizmittel kontaktierende Kontaktelemente und eine elektrische Isolierung zur Isolierung der Kontaktelemente gegenüber dem Heizelementgehäuse aufweist, wobei die Kontaktelemente aus dem Heizelement herausragen und wobei die Heizelemente mit ihrem Heizelementgehäuse mit dem Gehäuse abdichtend verbunden sind, wobei die Heizelemente derart angeordnet sind, dass sie in einer Strömungsrichtung des Fluids vom Fluideinlass zum Fluidauslass einseitig oder beidseitig von dem Fluid umströmbar sind. Dadurch wird eine einfache und kostengünstige elektrische Heizeinrichtung geschaffen, die einen guten Wärmeübergang zum zu erwärmenden Fluid aufweist.

Dabei ist es bei einem Ausführungsbeispiel der Erfindung besonders vorteilhaft, wenn die Heizelemente in einer Strömungsrichtung des Fluids betrachtet hintereinander und lateral versetzt zueinander angeordnet sind. Dadurch können die Heizelemente in einer Art Zick-Zack-Linie angeordnet sein, so dass das zu erwärmende Fluid von Heizelement zu Heizelement umgeleitet wird und damit ein verbesserter Wärmeübergang aufgrund der damit einhergehenden Fluidmischung erreicht wird.

Bei einem weiteren Ausführungsbeispiel ist es auch vorteilhaft, wenn die Heizelemente in Strömungsrichtung des Fluids betrachtet in zumindest einer Reihe oder in mehreren Reihen hintereinander und lateral versetzt zueinander angeordnet sind. Dadurch kann je nach Breite der Heizeinrichtung der jeweilige Fluidpfad um die Heizelemente bzw. zwischen den Heizelementen optimal angepasst werden, so dass der Wärmeübergang bei akzeptablem Druckabfall günstig ist. Ist der Bauraum eher schmal kann beispielsweise nur ein Heizelement in der lateralen Breite vorgesehen sein, das dann bevorzugt eine größere Länge in Strömungsrichtung aufweist. Ist der Bauraum eher größer, kann beispielsweise eine Mehrzahl von Heizelementen in der lateralen Breite vorgesehen sein, die dann gegebenenfalls auch eine geringere Länge in Strömungsrichtung aufweisen können.

Auch ist es vorteilhaft, wenn von dem Gehäuse ausgehend in den Innenraum des Gehäuses Strömungslenkungselemente hineinragen oder im Innenraum des Gehäuses Strömungslenkungselemente angeordnet sind, welche die Strömung des Fluids beeinflussen, insbesondere welche die Strömung des Fluids hin zu den lateral versetzten Heizelementen lenken. Dadurch wird der Fluidstrom bevorzugt dorthin gelenkt, wo die Heizelemente angeordnet sind. Der Querschnitt des Innenraums des Gehäuses der Heizeinrichtung wird dadurch lokalreduziert und der Fluidstrom wird hin zu dem Heizelement oder zu den Heizelementen gelenkt. Damit wird der Wärmeübertrag an das Fluid verbessert.

Auch ist es vorteilhaft, wenn ein Strömungslenkungselement jeweils benachbart zu einem Heizelement angeordnet ist und den Strömungsquerschnitt für das Fluid benachbart zu dem Heizelement reduziert. Dadurch wird vorteilhaft auf Höhe des Heizelements, in Strömungsrichtung betrachtet, der Querschnitt des Innenraums des Gehäuses reduziert und das Fluid wird hin zu dem Heizelement bzw. zu den Heizelement geleitet.

Auch ist es vorteilhaft, wenn die Heizelemente in einer Strömungsrichtung des Fluids betrachtet in Reihen lateral nebeneinander angeordnet sind, so dass das Fluid zwischen den Reihen durchströmbar ist. Dadurch kann das Fluid gleichzeitig in mehreren im Wesentlichen parallelen Pfaden an den Heizelementen vorbei strömen und aufgewärmt werden. Dies erhöht die Effizienz der Wärmeübertragung der elektrischen Heizeinrichtung.

So ist es auch vorteilhaft, wenn die Heizelemente einer Reihe oder in mehreren Reihen benachbart und vorzugsweise nebeneinander in Strömungsrichtung nacheinander angeordnet sind. Dadurch kann das Fluid in seiner Strömungsrichtung betrachtet durch mehrere nacheinander angeordnete Heizelemente und gegebenenfalls durch mehrere solcher Reihen, die bevorzugt nebeneinander angeordnet sind, erwärmt werden.

Auch ist es vorteilhaft, wenn die Heizelemente einer Reihen in Strömungsrichtung nacheinander und mit einem Abstand zueinander angeordnet sind. Dadurch kann durch den Abstand zwischen den Heizelementen eine Durchmischung bei jedem Abstand erfolgen, so dass das Fluid nach und nach an jedem Heizelement erwärmt wird und an den Abständen der Heizelemente eine Mischung erfolgt, so dass das Fluid beiderseits eines Heizelements etwa die gleiche Temperatur aufweist bzw. die Temperaturunterschiede beiderseits eines Heizelements nicht so groß sind.

Auch ist es vorteilhaft, wenn die Heizelemente eine Erstreckung in Strömungsrichtung aufweisen, die größer ist als eine Erstreckung quer zur Strömungsrichtung, betrachtet in einer Ebene parallel zu der Wandung mit den Öffnungen, in welche die Heizelemente eingesetzt sind. Dies bedeutet, dass die Heizelemente im Wesentlichen in Strömungsrichtung bzw. längs der Strömungsrichtung zwischen Fluideinlass und Fluidauslass angeordnet sind. Dadurch können die Heizelemente größer ausgebildet werden und können auch der Fluidtrennung dienen.

Auch ist es vorteilhaft, wenn die Heizelemente eine Erstreckung in Strömungsrichtung aufweisen, die kleiner ist als eine Erstreckung quer zur Strömungsrichtung, betrachtet in einer Ebene parallel zu der Wandung mit den Öffnungen, in welche die Heizelemente eingesetzt sind. Dies bedeutet, dass die Heizelemente im Wesentlichen quer zur Strömungsrichtung bzw. quer zur Strömungsrichtung zwischen Fluideinlass und Fluidauslass angeordnet sind. Dadurch können die Heizelemente als Barrieren dienen und das Fluid umlenken, um den Fluidpfad innerhalb des Gehäuses zwischen Fluideinlass und Fluidauslass zu verlängern.

Ebenso ist es zweckmäßig, wenn die Heizelemente an einer Seitenwand des Gehäuses anliegen oder daran befestigt sind. Dadurch wird erreicht, dass das Fluid nicht zwischen der Seitenwand des Gehäuses und dem Heizelement vorbei strömen kann, sondern um das Heizelement herum strömen muss. Dies verlängert den Fluidpfad, so dass das Fluid entlang eines längeren Fluidpfads erwärmt werden kann.

Ebenso ist es vorteilhaft, wenn jeweilige Heizelemente, insbesondere alternierend, an gegenüberliegenden Seitenwänden des Gehäuses anliegen oder daran befestigt sind. Dadurch wird ein Zick-Zack-förmiger Fluidpfad gebildet, welcher eine verbesserte Erwärmung bewirkt.

Weiterhin ist es auch vorteilhaft, wenn im Innenraum des Gehäuses zumindest eine Trennwand angeordnet ist, welche den Innenraum des Gehäuses in mehrere Fluidpfade unterteilt, die von dem Fluid seriell durchströmt werden. Dadurch kann der Fluidpfad zusätzlich verlängert bzw. moduliert werden, um das Fluid auf einem längeren Weg erwärmen zu können.

Gemäß einem weiteren erfindungsgemäßen Gedanken ist es vorteilhaft, wenn im Innenraum des Gehäuses die Heizelemente derart angeordnet sind, dass sie den Innenraum des Gehäuses in mehrere Fluidpfade unterteilen, die von dem Fluid seriell durchströmt werden. Dadurch wird der Fluidpfad auch verlängert, um das Fluid auf einem längeren Weg besser erwärmen zu können.

Auch ist es vorteilhaft, wenn die Heizelemente derart angeordnet sind, dass zumindest einzelne Heizelemente in zumindest einem der Fluidpfade oder zumindest einzelne Heizelemente in jedem der Fluidpfade angeordnet sind bzw. die Fluidpfade an zumindest einem der Heizelemente vorbei geführt sind.

Gemäß einem weiteren erfindungsgemäßen Gedanken können die zuvor beschriebenen Ausführungsvarianten mit den nachfolgenden Ausführungsvarianten kombiniert und optimiert werden.

Eine erfindungsgemäße Ausgestaltung betrifft auch eine elektrische Heizeinrichtung mit einem Gehäuse mit einem Fluideinlass und mit einem Fluidauslass, wobei in einer Wandung eine Anzahl von Öffnungen vorgesehen ist, in welche Heizelemente eingesetzt und in den Innenraum des Gehäuses ragen, wobei die Heizelemente ein Heizelementgehäuse aufweisen und wobei ein Heizelement in dem Heizelementgehäuse zumindest ein Heizmittel und das zumindest eine Heizmittel kontaktierende Kontaktelemente und eine elektrische Isolierung zur Isolierung der Kontaktelemente gegenüber dem Heizelementgehäuse aufweist, wobei die Kontaktelemente aus dem Heizelement herausragen und wobei die Heizelemente mit ihrem Heizelementgehäuse derart in die Öffnungen des Gehäuses eingesetzt sind, dass die Heizelementgehäuse mit dem Gehäuse abdichtend verbunden sind. Dadurch kann das jeweilige Heizelement in das Gehäuse hineinragen, das von dem zu erwärmenden Fluid durchströmt wird, wobei dennoch eine einfache und kostengünstige Bauweise erzielt ist.

Besonders vorteilhaft ist es, wenn das Heizelementgehäuse mit dem Gehäuse durch ein thermisches Verbindungsverfahren abgedichtet verbunden ist, wie durch Schweißen und/oder Löten und/oder Kleben verbunden ist. Dadurch wird erreicht, dass die Verbindung zwischen dem Heizelementgehäuse und dem Gehäuse stabil und dauerhaft dicht ist, um die notwendige Betriebssicherheit zu erreichen.

Auch ist es vorteilhaft, wenn die Heizelemente derart gekapselt sind, dass das Heizelementgehäuse bis auf einen Durchgang für die Kontaktelemente abgedichtet verschlossen ist. Dadurch ist das Heizelementgehäuse nach außen hin zum zu erwärmenden Fluid dicht ausgebildet und dennoch können die Kontaktelemente aus dem Heizelementgehäuse herausgeführt werden, um die Bestromung der Heizmittel vorzunehmen. Die Kontaktelemente sind dabei allerdings von dem zu erwärmenden Fluid getrennt und abgedichtet angeordnet.

Auch ist es vorteilhaft, wenn die Kontaktelemente in dem Durchgang abgedichtet durchgeführt sind. So wird erreicht, dass auch versehentlich auftretendes Fluid im Bereich der Kontaktelemente nicht in das Heizelement eindringen kann.

Besonders vorteilhaft ist es auch, wenn das Heizelementgehäuse aus einem einseitig offenen Rohr, einem tiefgezogenen oder fiießgepressten Rohrelement oder aus zwei Schalen, wie Halbschalen gebildet ist. Dadurch kann erreicht werden, dass das Heizelementgehäuse quasi umseitig geschlossen ist und nur für den Durchgang der Kontaktelemente eine Öffnung aufweist.

Bei einem Ausführungsbeispiel ist es vorteilhaft, wenn das zumindest eine Heizmittel und die das zumindest eine Heizmittel kontaktierenden Kontaktelemente und die elektrische Isolierung in das Heizelementgehäuse als vormontierte Einheit eingesetzt sind. Dadurch kann die Montage erheblich vereinfacht werden und es entstehen weniger Fehler durch beispielsweise eine nicht richtig ausgeführte Isolation. Nach dem Einsetzen kann dann beispielsweise auch das Heizelementgehäuse verdrückt oder verformt werden, um die eingesetzten Elemente bzw. die vormontierte Einheit darin formschlüssig zu halten.

Auch ist es vorteilhaft, wenn das Gehäuse zumindest zweiteilig ausgebildet ist und aus einem Boden mit den Öffnungen zur Aufnahme der Heizelemente und aus zumindest einem weiteren Gehäuseteil besteht. Dadurch kann die Heizeinrichtung einfacher hergestellt sein, beispielsweise durch Tiefziehen einzelner Gehäuseteile des Gehäuses, wobei die Gehäuseteile des Gehäuses anschließend abgedichtet miteinander verbunden werden, um den fluiddurchströmten Innenraum abzudichten. Dies kann beispielsweise durch Löten, Schweißen oder Kleben erfolgen oder durch Anordnung einer Dichtung und durch ein Vercrimpen oder durch eine Welischlitzbördelung.

Besonders vorteilhaft ist es, wenn das Gehäuse zumindest zweiteilig ausgebildet ist und aus einem Boden mit den Öffnungen zur Aufnahme der Heizelemente und aus zumindest einem weiteren Gehäuseteil besteht. Dabei kann der Boden eben ausgebildet sein und das andere Gehäuseteil kann wannenartig ausgebildet sein. Auch kann der Boden gewölbt sein, wie beispielsweise wannenförmig. In diesem Fall könnte das andere Gehäuseteil auch eben ausgebildet sein.

Auch ist es besonders vorteilhaft, wenn weiterhin eine elektronische Steuereinheit vorgesehen ist, welche die Kontaktelemente der Heizelemente kontaktiert, wobei die Steuereinheit mit dem Boden verbindbar ist. Dadurch kann die Heizeinrichtung mit elektronischer Steuereinheit als Baueinheit kompakt hergestellt und gemeinsam im Kraftfahrzeug verbaut werden, beispielsweise im Motorraum.

Für einen verbesserten Wärmeübergang und einen angepassten Druckabfall des zu erwärmenden Fluids ist es vorteilhaft, wenn in dem Gehäuse Umlenkmittel vorgesehen sind, welche einen Fluidstrom zwischen dem Fluideinlass und dem Fluidauslass umlenken. Dadurch wird der Strömungspfad des zu erwärmenden Fluids umgelenkt und insbesondere auch verlängert, um einen verbesserten Wärmeübergang bei akzeptablem Druckabfall zu erreichen.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage mehrerer Ausführungsbeispiele anhand der Figuren der Zeichnungen näher erläutert.

Es zeigen:
- Fig. 1: eine schematische Schnittdarstellung eines Ausführungsbeispiels einer erfindungsgemäßen elektrischen Heizeinrichtung,
- Fig. 2: eine schematische Schnittdarstellung eines weiteren Ausführungsbeispiels einer erfindungsgemäßen elektrischen Heizeinrichtung,
- Fig. 3: eine Darstellung eines Schnitts durch ein Heizelement,
- Fig. 4: eine schematische Teildarstellung eines weiteren Ausführungsbeispiels einer erfindungsgemäßen elektrischen Heizeinrichtung,
- Fig. 5: eine schematische Teildarstellung eines weiteren Ausführungsbeispiels einer erfindungsgemäßen elektrischen Heizeinrichtung,
- Fig. 6: eine Darstellung eines Schnitts durch ein Heizelement,
- Fig. 7: eine schematische Schnittdarstellung eines weiteren Ausführungsbeispiels einer erfindungsgemäßen elektrischen Heizeinrichtung,
- Fig. 8: eine schematische Teildarstellung eines weiteren Ausführungsbeispiels einer erfindungsgemäßen elektrischen Heizeinrichtung,
- Fig. 9: eine schematische Teildarstellung eines weiteren Ausführungsbeispiels einer erfindungsgemäßen elektrischen Heizeinrichtung,
- Fig. 10: eine schematische Teildarstellung eines weiteren Ausführungsbeispiels einer erfindungsgemäßen elektrischen Heizeinrichtung,
- Fig. 11: eine Darstellung eines Schnitts durch ein Heizelement,
- Fig. 12: eine Darstellung eines Schnitts durch ein Heizelement,
- Fig. 13: eine Darstellung eines Schnitts durch ein Heizelement,
- Fig. 14: eine schematische Teildarstellung eines weiteren Ausführungsbeispiels einer erfindungsgemäßen elektrischen Heizeinrichtung,
- Fig. 15: eine schematische Teildarstellung eines weiteren Ausführungsbeispiels einer erfindungsgemäßen elektrischen Heizeinrichtung,
- Fig. 16: eine Darstellung eines Schnitts durch ein Heizelement,
- Fig. 17: eine schematische Teildarstellung eines weiteren Ausführungsbeispiels einer erfindungsgemäßen elektrischen Heizeinrichtung,
- Fig. 18: eine schematische Teildarstellung eines weiteren Ausführungsbeispiels einer erfindungsgemäßen elektrischen Heizeinrichtung,
- Fig. 19: eine schematische Teildarstellung eines weiteren Ausführungsbeispiels einer erfindungsgemäßen elektrischen Heizeinrichtung,
- Fig. 20: eine schematische Teildarstellung eines weiteren Ausführungsbeispiels einer erfindungsgemäßen elektrischen Heizeinrichtung,
- Fig. 21: eine schematische Schnittdarstellung eines weiteren Ausführungsbeispiels einer erfindungsgemäßen elektrischen Heizeinrichtung,
- Fig. 22: eine schematische Schnittdarstellung eines weiteren Ausführungsbeispiels einer erfindungsgemäßen elektrischen Heizeinrichtung,
- Fig. 23: eine schematische Schnittdarstellung eines weiteren Ausführungsbeispiels einer erfindungsgemäßen elektrischen Heizeinrichtung,
- Fig. 24: eine schematische Schnittdarstellung eines weiteren Ausführungsbeispiels einer erfindungsgemäßen elektrischen Heizeinrichtung,
- Fig. 25: eine schematische Schnittdarstellung eines weiteren Ausführungsbeispiels einer erfindungsgemäßen elektrischen Heizeinrichtung,
- Fig. 26: eine schematische Schnittdarstellung eines weiteren Ausführungsbeispiels einer erfindungsgemäßen elektrischen Heizeinrichtung,
- Fig. 27: eine schematische Teildarstellung eines weiteren Ausführungsbeispiels einer erfindungsgemäßen elektrischen Heizeinrichtung,
- Fig. 28: eine schematische Teildarstellung eines weiteren Ausführungsbeispiels einer erfindungsgemäßen elektrischen Heizeinrichtung,
- Fig. 29: eine Darstellung eines Schnitts durch ein Heizelement,
- Fig. 30: eine schematische Teildarstellung eines weiteren Ausführungsbeispiels einer erfindungsgemäßen elektrischen Heizeinrichtung,
- Fig. 31: eine schematische Teildarstellung eines weiteren Ausführungsbeispiels einer erfindungsgemäßen elektrischen Heizeinrichtung,
- Fig. 32: eine schematische Schnittdarstellung durch eine erfindungsgemäße Heizeinrichtung,
- Fig. 33: eine schematische Schnittdarstellung durch eine erfindungsgemäße Heizeinrichtung,
- Fig. 34: eine schematische Schnittdarstellung durch eine erfindungsgemäße Heizeinrichtung,
- Fig. 35: eine schematische Schnittdarstellung durch eine erfindungsgemäße Heizeinrichtung,
- Fig. 36: eine schematische Schnittdarstellung durch eine erfindungsgemäße Heizeinrichtung,
- Fig. 37: eine schematische Schnittdarstellung durch eine erfindungsgemäße Heizeinrichtung,
- Fig. 38: eine schematische Seitenansicht eines Heizelements,
- Fig. 39: eine schematische Ansicht eines Heizelements von oben,
- Fig. 40: eine schematische Schnittansicht eines Heizelements,
- Fig. 41: eine Ansicht der Anordnung von Heizmitteln,
- Fig. 42: eine Ansicht der Anordnung von Heizmitteln, und
- Fig. 43: eine Ansicht der Anordnung von Heizmitteln.

### Bevorzugte Ausführung der Erfindung

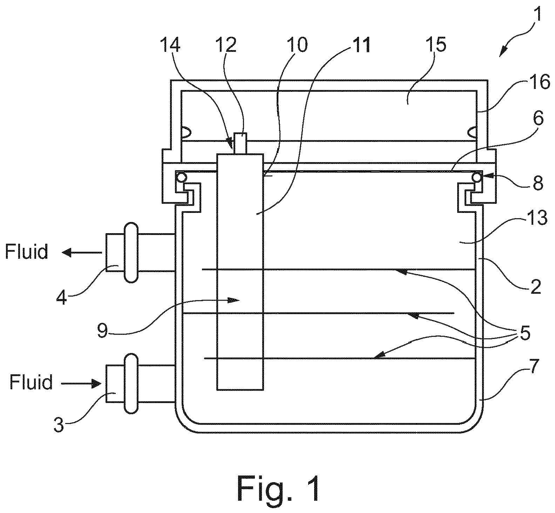

Die Figuren 1 bis 43 zeigen verschiedene Ansichten oder Details erfindungsgemäßer Heizeinrichtungen, wobei Merkmale einzelner Ausführungsbeispiele miteinander kombinierbar sind und ebenfalls ein erfindungsgemäßes Ausführungsbeispiel darstellen.

Die Figur 1 zeigt in einer schematischen Darstellung eine elektrische Heizeinrichtung 1 mit einem Gehäuse 2. An dem Gehäuse 2 ist ein Fluideinlass 3 und ein Fluidauslass 4 vorgesehen, so dass ein zu erwärmendes Fluid durch den Fluideinlass in das Gehäuse einströmen kann, dieses durchströmen kann und darin erwärmt werden kann und durch den Fluidauslass 4 wieder aus dem Gehäuse 2 ausströmen kann. In dem Gehäuse 2 können Umlenkmittel 5 vorgesehen sein, welche in dem Gehäuse 2 den Fluidstrom des zu erwärmenden Fluids zwischen dem Fluideinlass 3 und dem Fluidauslass 4 umlenken, um eine günstigere Erwärmung des zu erwärmenden Fluids bei geeignetem Druckabfall zu bewirken. Dabei können die Umlenkmittel 5 beispielsweise als Umlenkwände angeordnet sein, um beispielsweise einen mäanderförmigen Fluidstrom durch das Gehäuse 2 zu bewirken.

Das Gehäuse 2 ist vorteilhaft zumindest zweiteilig ausgebildet, wobei ein Boden 6 und ein weiteres Gehäuseteil 7 vorgesehen sind, welche dicht miteinander verbunden sind. Dabei kann beispielsweise unter Zwischenlage einer Dichtung 8 der Boden 6 mit dem Gehäuseteil 7 formschlüssig verbunden und abgedichtet sein. Dies kann beispielsweise durch eine Klemmverbindung oder durch eine Wellschlitzbördelung durch eine mechanische Verbindung erfolgen. Alternativ dazu kann der Boden 6 mit dem Gehäuseteil 7 auch durch Löten oder Schweißen oder durch Verkleben miteinander verbunden sein.

In den Innenraum 13 des Gehäuses ragen Heizelemente 9, welche durch Öffnungen 10 im Boden 6 hindurchgreifen, wobei der Boden 6 als Wandung vorteilhaft eine Anzahl von Öffnungen 10 aufweist, so dass eine entsprechende Anzahl von Heizelementen 9 in den Innenraum 13 des Gehäuses 2 ragen kann. Die Heizelemente 9 sind entsprechend in die Öffnungen 10 des Bodens 6 eingesetzt, wobei die Heizelemente 9 in den Boden 6 abdichtend eingesetzt sind. Die Verbindung zwischen Heizelement 9 und Boden 6 im Bereich der Öffnungen 10 erfolgt vorzugsweise durch Schweißen, Löten und/oder Kleben.

Ein Heizelement 9 weist zumindest ein Heizelementgehäuse 11 auf, in welchem zumindest ein Heizmittel 19 oder eine Mehrzahl von Heizmitteln 19 und das oder die Heizmittel 19 kontaktierende Kontaktelemente 12 und eine elektrische Isolierung 20 angeordnet sind. Dabei sind zumindest zwei Kontaktelemente 12 vorgesehen, welche das oder die Heizmittel 19 kontaktieren, wobei die Kontaktelemente 12 über die vorgesehene Isolierung 20 gegenüber dem Heizelementgehäuse 11 elektrisch isoliert sind. Zur Kontaktierung der Kontaktelemente 12 ragen diese aus dem Heizelement 9 bzw. aus dem Heizelementgehäuse 11 außerhalb des Innenraums 13 des Gehäuses 2 aus dem Heizelementgehäuse 11 heraus.

Die Heizelemente 9 sind mit ihrem Heizelementgehäuse 11 dabei derart in die Öffnungen 10 des Gehäuses 2 abgedichtet eingesetzt, dass das Gehäuse 2 abgedichtet ist. Die Verbindung zwischen dem Heizelementgehäuse 11 und dem Gehäuse 2 kann durch ein thermisches Verbindungsverfahren abgedichtet erfolgen, wie beispielsweise durch Schweißen und/oder Löten und/oder Kleben. Dadurch wird eine abgedichtete stabile Verbindung zwischen dem Heizelementgehäuse 11 und dem Boden 6 bzw. dem Gehäuse 2 bewirkt, so dass das Fluid im Innenraum 13 des Gehäuses 2 strömen kann, ohne dass das Heizmittel 19 bzw. die Kontaktelemente 12 mit dem Fluid in Kontakt treten. Die Heizelemente 9 sind entsprechend gekapselt, so dass das Heizelementgehäuse 11 bis auf einen Durchgang 14 für die Kontaktelemente 12 abgedichtet verschlossen ist. Dabei ist es auch bevorzugt, wenn die Kontaktelemente 12 in dem Durchgang 14 abgedichtet durchgeführt sind. Dies kann beispielsweise durch die vorgesehene elektrische Isolierung 20 oder durch ein zusätzliches Dichtelement erfolgen.

Bevorzugt ist das Heizelementgehäuse 11 aus einem Rohr ausgebildet, welches beispielsweise einseitig offen ist, um den Durchgang 14 auszubilden, wobei die andere Seite des Rohrs abgedichtet geschlossen ist, so dass der geschlossene Bereich des Rohrs durch die Öffnung 10 im Boden 6 in den Innenraum 13 des Gehäuses 2 hineinragen kann. Das Heizelementgehäuse 11 kann beispielsweise durch ein tiefgezogenes oder fließgepresstes Rohrelement, ein geschweißtes oder gefalztes Rohr oder anderweitig durch ein anderweitig hergestelltes Rohr ausgebildet sein.

Alternativ kann das Heizelementgehäuse 11 auch durch eine Tasche gebildet sein, die beispielsweise aus zwei Schalen, wie beispielsweise aus zwei Halbschalen 52, 53, gebildet ist. Die Ausbildung des Heizelementgehäuses 11, beispielsweise durch zwei Schalen, kann bevorzugt dadurch erfolgen, dass die beiden Schalen randseitig miteinander thermisch gefügt sind, wie beispielsweise geschweißt, gelötet und/oder verklebt sind, so dass lediglich der Durchgang 14 für die Kontaktelemente 12 verbleibt. Dabei kann es auch vorteilhaft sein, wenn der Durchgang 14 auch für das Einsetzen der Heizmittel 19, der Kontaktelemente 12 und der elektrischen Isolierung 20 dient.

Besonders bevorzugt ist es, wenn das oder die Heizmittel 19 und die das zumindest eine Heizmittel 19 kontaktierenden Kontaktelemente 12 und die elektrische Isolierung 20 in das Heizelementgehäuse 11 als vormontierte Einheit eingesetzt sind. Dazu kann die vormontierte Einheit vorgefertigt werden, um in ein bereitgestelltes Heizelementgehäuse 11 eingesetzt zu werden.

Zur Steuerung der elektrischen Heizeinrichtung 1 ist vorteilhaft eine elektrische Steuereinheit 15 vorgesehen, welche mit den Kontaktelementen 12 der Heizelemente 9 elektrisch und/oder mechanisch verbunden ist, so dass eine gezielte Steuerung der Heizelemente 9 erfolgen kann.

Die elektronische Steuereinheit 15 ist bevorzugt mit dem Boden 6 und/oder mit einem Steuereinheitengehäuse 16 verbunden, wobei im Falle der Verbindung der Steuereinheit 15 mit dem Steuereinheitengehäuse 16 das Steuereinheitengehäuse 16 vorteilhafterweise mit dem Boden 6 verbunden ist. Dadurch kann eine Baueinheit geschaffen werden, die es erlaubt, im Kraftfahrzeug bauraumabhängig angeordnet zu werden.

In einem Ausführungsbeispiel der erfindungsgemäßen Heizeinrichtung ist das jeweilige Heizelement 9 für sich gekapselt, so dass das jeweilige Heizelement 9 in den Fluid durchströmten Innenraum 13 des Gehäuses 2 hineinragt. Da die jeweiligen Heizelemente 9 mit dem Boden 6 thermisch gefügt sind, sind die stromführenden Teile der Heizelemente 9 vom Fluidstrom räumlich und elektrisch bzw. galvanisch getrennt. Insbesondere bei Hochvoltanwendungen mit Spannungen von größer als 60 Volt ist dies vorteilhaft.

In der Herstellung kann es vorteilhaft sein, wenn der Boden 6 und das Heizelementgehäuse 11 jeweils vorgefertigt werden und mittels eines thermischen Fügeverfahrens, siehe oben, miteinander abgedichtet verbunden werden. Danach kann das zumindest eine Heizmittel 19 mit den Kontaktelementen 12 und der elektrischen Isolierung 20 in das Heizelementgehäuse 11 eingesetzt, wie eingeschoben, werden und das Heizelementgehäuse 11 kann beispielsweise zur formschlüssigen Verbindung der eingesetzten Bauteile verdrückt werden, so dass auch ein günstiger thermischer Kontakt der Elemente in dem Heizelementgehäuse 11 erzeugt wird.

Alternativ können die Heizelemente 9 auch vorgefertigt werden und erst danach in die Öffnungen des Bodens 6 eingebracht werden und beispielsweise durch ein thermisches Fügeverfahren mit dem Boden 6 verbunden werden.

Das Heizelementgehäuse 11 kann beispielsweise durch ein extrudiertes Rohr, ein Fließpressteil oder ein Tiefziehteil hergestellt werden. Alternativ kann auch ein Schweißrohr oder ein Falzrohr verwendet werden, wobei nach Einbringen der Heizmittel 19, der Kontaktelemente 12 und der elektrischen Isolierung 20 das Heizelementgehäuse 11 verdrückt wird, um den thermischen Kontakt zwischen dem Heizmittel 19, den Kontaktelementen 12 und der Isolierung 20 mit dem Heizelementgehäuse 11 zu verbessern, um einen guten Wärmeübergang zu dem zu erwärmenden Fluid zu erreichen.

Wie bereits oben ausgeführt, kann das Heizelementgehäuse 11 auch aus zwei Schalen, wie beispielsweise zwei Halbschalen 52, 53, zusammengesetzt sein, wobei in diesem Falle die elektrische Isolierung 20 mit den Heizmitteln 19 und den Kontaktelementen 12 eingelegt wird. Die beiden Schalen 52, 53 können beispielsweise durch thermisches Fügen, also Schweißen, Kleben oder Löten miteinander verbunden werden. Dabei werden die Schalen vorzugsweise an ihrem Rand miteinander abgedichtet gefügt. Alternativ können die Schalen bzw. Halbschalen 52, 53 auch mechanisch gefügt werden, beispielsweise durch Bördeln oder anderweitiges Verformen.

Die Durchströmung des Innenraums 13 des Gehäuses 2 kann in einfacher Weise ausgebildet werden oder mit Umlenkung des Fluids. Dazu können die Umlenkmittel 5 vorgesehen sein.

Das Gehäuse 2 kann bevorzugt aus Stahl, Aluminium oder Kunststoff bestehen und beispielsweise eine Wandstärke von 1 bis 4 mm aufweisen. Der Boden 6 besteht vorzugsweise aus Stahl, Aluminium oder Buntmetall und weist vorteilhaft eine Materialstärke von 0,5 bis 3 mm auf. Das Heizelementgehäuse 11 besteht vorzugsweise aus Stahl, Aluminium oder Buntmetall und weist vorteilhaft eine Materialstärke von 0,2 bis 1 mm auf. Die Kontaktelemente 12 sind vorzugsweise als Kontaktbleche aus Aluminium oder Buntmetall ausgebildet und weisen vorteilhaft eine Materialstärke von 0,2 bis 1 mm auf. Alternative Ausbildungen von Gehäuse 2, Boden 6, Heizelementgehäuse 11 und/oder Kontaktelement 12 können auch davon abweichende Abmessungen bzw. Materialstärken und Materialien aufweisen.

Die erfindungsgemäße elektrische Heizeinrichtung 1 ist bevorzugt eine Hochvoltheizeinrichtung für Spannungen von mehr als 60 Volt bzw. insbesondere von etwa 300 Volt oder mehr, mit einer Vielzahl gekapselter Heizelemente 9, wobei eine größere Anzahl kleinerer gekapselter Heizelemente 9 oder eine kleinere Anzahl größerer Heizelemente 9 vorgesehen sein kann.

Die Elemente der Heizelemente 9 können in das Heizelementgehäuse 11 eingeschoben und verpresst oder verklebt werden oder sie können in die Schalen bzw. Halbschalen 52, 53 eingelegt oder eingeklebt werden, wobei die Halbschalen 52, 53 dann noch oder zuvor miteinander abgedichtet verbunden werden, beispielsweise thermisch gefügt werden.

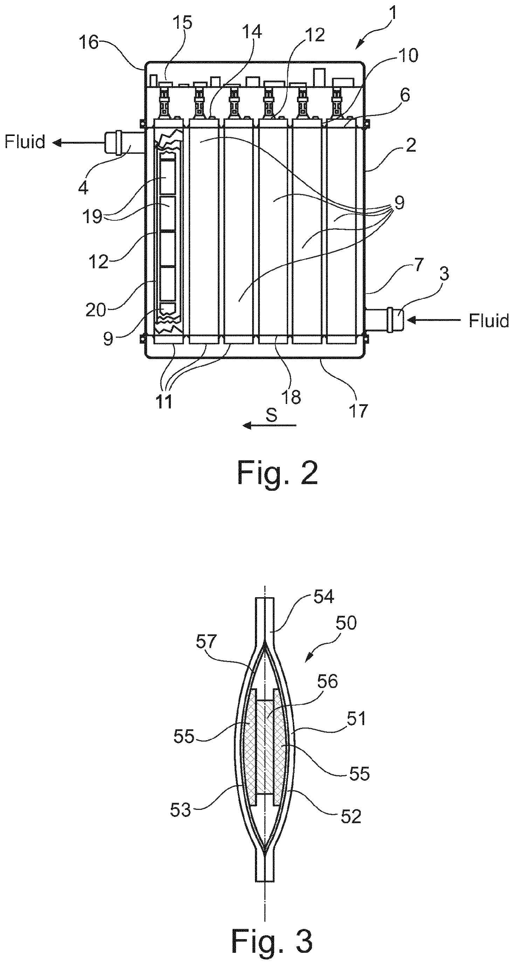

Die Figur 2 zeigt eine alternative Ausgestaltung einer elektrischen Heizeinrichtung 1 mit einer Mehrzahl von Heizelementen 9, die in Strömungsrichtung des Fluids nacheinander und gegebenenfalls auch in Reihen nebeneinander angeordnet sind. Das Gehäuse 2 ist mehrteilig ausgebildet mit einem Boden 6, einem weiteren Gehäuseteil 7, einem unteren Gehäusedeckel 17 und mit einem zweiten Boden 18. Die Heizelemente 9 können in die Öffnungen 10 des Bodens 6 eingesetzt und thermisch gefügt abgedichtet verbunden werden, wobei die Heizelementgehäuse 11 eine Art Rohrmatrix bilden, die zwischen den Böden 6 und 18 angeordnet ist, wobei die Heizelementgehäuse einseitig geschlossen sind und auf der anderen Seite einen Durchgang 14 für die Kontaktelemente 12 aufweisen.

In Figur 2 sind auch die Heizmittel 19 als PTC-Elemente zu erkennen, die beidseitig mit den Kontaktelementen 12 in elektrischem Kontakt stehen, wobei um die Kontaktelemente 12 und die Heizmittel 19 die elektrische Isolierung 20 angeordnet ist, um den Verbund von Heizmitteln 19 mit Kontaktelementen 12 gegenüber dem Heizelementgehäuse 11 elektrisch zu isolieren. Mit den Kontaktelementen 12 ist die Steuereinheit 15 elektrisch verbunden, wobei das Steuereinheitengehäuse 16 mit dem Boden 6 mechanisch abgedichtet verbunden ist.

Statt der PTC-Heizmittel können auch andere Heizmittel verwendet werden. Dies gilt grundsätzlich auch für alle anderen Ausführungsbeispiele, dass PTC-Heizmittel oder andere Heizmittel verwendbar sind.

In Figur 2 ist zu erkennen, dass der Fluideinlass 3 auf einer anderen Seite des Gehäuses 2 angeordnet ist als der Fluidauslass 4. Dies bewirkt ohne interne Umlenkmittel 5 eine im Wesentlichen I-Förmige Durchströmung des Gehäuses 2. Sind Umlenkmittel vorgesehen, so kann eine mäanderförmige Durchströmung erfolgen.

Die Figur 3 zeigt ein Ausführungsbeispiel eines Heizelements 50 im Schnitt mit einem Heizelementgehäuse 51, welches aus zwei Halbschalen 52, 53 besteht, die bevorzugt thermisch gefügt miteinander verbunden sind, wie beispielsweise geschweißt, verlötet und/oder verklebt sind.

Die Halbschalen 52, 53 weisen einen Durchgang 54 auf, durch welchen die Kontaktelemente 55 zur elektrischen Kontaktierung beispielsweise mit einer Steuereinheit hindurchragen können. In dem Heizelementgehäuse 51 sind die Heizmittel 56, beidseits davon die Kontaktelemente 55 sowie eine umlaufende elektrische Isolierung 57 angeordnet. Die elektrische Isolierung ist im Allgemeinen eine solide, flexible, dünne oder dicke Isolierung, die aus einem elektrisch nicht leitenden Isolationsmaterial besteht. Die Figur 3 zeigt, dass das Heizelement im Schnitt bikonvex ausgebildet ist. Bei anderen Ausführungsbeispielen kann dies jedoch auch anders sein, beispielsweise eckig, rechteckig, oval oder rund etc. Die bikonvexe Form ist für den Druckabfall des Fluids günstig.

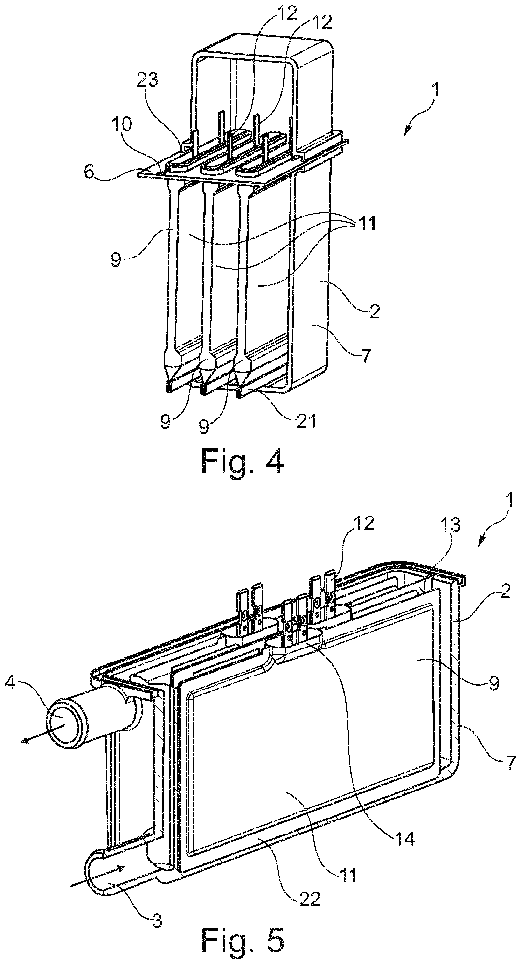

Die Figur 4 zeigt ein weiteres Ausführungsbeispiel einer elektrischen Heizeinrichtung 1 ähnlich wie Figur 1 in einer teilgeschnittenen Ansicht, wobei die Heizelemente 9 mit ihren Heizelementgehäusen 11 zu erkennen sind. Es sind drei Heizelemente 9 in Strömungsrichtung betrachtet nebeneinander und beabstandet zueinander angeordnet. Die Heizelementgehäuse 11 sind an ihrem oberen Ende in die Öffnungen 10 des Bodens 6 eingesetzt, wobei die Kontaktelemente 12 aus den Heizelementen 9 heraus ragen. Die Heizelementgehäuse 11 sind als einseitig geschlossene Rohre ausgebildet, wobei die Heizmittel, die Kontaktelemente 12 und die elektrische Isolierung 20 in das Heizelementgehäuse 11 eingesetzt sind und anschließend das jeweilige Heizelementgehäuse im mittigen Bereich verpresst ist, so dass ein günstiger thermischer Kontakt zwischen den Elementen des Heizelements mit dem Heizelementgehäuse 11 erreicht werden kann.

Das zu erwärmende Fluid kann in Strömungsrichtung beiderseits an dem Heizelementgehäuse vorbeiströmen, so dass eine günstige Strömungsführung erreicht werden kann. In Figur 4 ist zu erkennen, dass die Rohre der Heizelementgehäuse auf der Unterseite verschlossen sind. Dies kann durch ein Umfalzen oder durch ein Verquetschen oder durch Aufsetzen eines Abschlusselements 21 oder durch Schweißen, Löten oder Kleben erfolgen.

In Figur 4 ist zu erkennen, dass die Öffnungen 10 in dem Boden 6 als Durchzüge mit einem hoch gezogenen Rand ausgebildet sind. Dabei kann der hoch gezogene Rand 23 sowohl in den Innenraum 13 des Gehäuses 2 hineinragen oder, wie gezeigt, von dem Innenraum 13 weg weisen.

Die Figur 5 zeigt eine alternative elektrische Heizeinrichtung 1, bei der die Heizelemente 9 als eher flächige Elemente ausgebildet sind, wobei das Heizelementgehäuse 11 bevorzugt aus Schalen, wie insbesondere aus Halbschalen 52, 53, gebildet ist, so dass die Elemente der Heizelemente 9, also die Heizmittel 19, die Kontaktelemente 12 und die elektrische Isolierung 20 in die Schalen bzw. Halbschalen 52, 53 eingelegt werden können und beispielsweise verklebt werden können, wobei die beiden Halbschalen 52, 53 des Heizelementgehäuses 11 am Rand 22 beispielsweise auch thermisch gefügt sind, wie insbesondere geschweißt, verlötet oder geklebt sind.

Die Gestaltung der Heizelemente 9 ist eher flächig mit einer flachen Gestalt, die etwa eine rechteckige Kontur zeigt, die den Innenraum 13 des Gehäuses 2 in Längsrichtung nahezu ausfüllt. Dabei bilden die Heizelemente 9 eine Art Trennwand, die eine mäanderförmige Durchströmung des Gehäuses 2 bewirkt. Dabei ist in Figur 5 zu erkennen, dass das mittlere Heizelement 9 an einer rückwärtigen Wand des Gehäuses 2 anliegt, welche von dem Fluideinlass 3 und dem Fluidauslass 4 entfernt ist. Die beiden äußeren Heizelemente 9 können beispielhaft auch an der Wand des Gehäuses 2 anliegen, in der der Fluideinlass 3 und der Fluidauslass 4 angeordnet sind.

Es ist in Figur 5 zu erkennen, dass der umlaufende Rand 22 des Heizelements 9 nahezu vollständig umläuft, bis auf den Durchgang 14, der als ovale Öffnung ausgebildet ist, um die Kontaktelemente 12 aus dem Heizelement 9 herausführen zu können. Die Gestaltung des Durchganges 14 kann auch anderweitig erfolgen und muss nicht zwingend oval ausgebildet sein. Die Durchgänge 14 der benachbarten Heizelemente 9 sind gegeneinander versetzt angeordnet. Damit wird bei der Gestaltung des Durchganges 14 erlaubt, dass die Heizelemente 9 sich quer zur Strömungsrichtung des Fluids relativ nahe kommen können.

Die Figuren 4 und 5 zeigen, dass eine Anordnung von Heizelementen 9 in einer benachbarten Anordnung zueinander ausgebildet sein kann. Grundsätzlich können die Heizelemente 9 längs und/oder quer zueinander, also in Strömungsrichtung des Fluids oder quer dazu, in Reihen angeordnet sein.

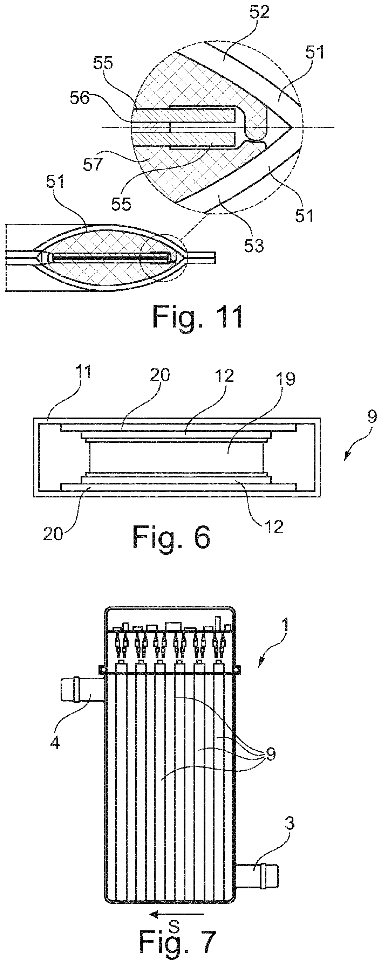

Die Figur 6 zeigt schematisch die Anordnung der Elemente der Heizelemente 9, wobei in dem umlaufend geschlossenen Heizelementgehäuse 11 die Heizmittel 19 und die Kontaktelemente 12 sowie die elektrische Isolierung 20 angeordnet sind. Im Ausführungsbeispiel der Figur 6 ist die elektrische Isolierung 20 durch zwei Isolierelemente ausgebildet. Sie kann auch durch ein einziges beispielsweise schlauchartiges Element ausgebildet sein. Im Ausführungsbeispiel der Figur 6 ist das Heizelementgehäuse 11 im Schnitt rechteckig ausgebildet. Dies kann auch anderweitig ausgestaltet sein, wie rund, oval, eckig etc.

Die Figur 7 zeigt eine Ausgestaltung einer elektrischen Heizeinrichtung 1 ähnlich der Figur 2, wobei die Heizelemente 9 in Figur 7 quer zur Strömungsrichtung S zwischen Fluideinlass 3 und Fluidauslass 4 angeordnet sind, während sie in Figur 1 längs zur Strömungsrichtung S zwischen Fluideinlass 3 und Fluidauslass 4 angeordnet sind. Dies bedeutet, dass die Strömung des zu erwärmenden Fluids zwischen dem Fluideinlass 3 und dem Fluidauslass 4 in Figur 2 bevorzugt in einer Richtung parallel einer Ebene zwischen Fluideinlass und Fluidauslass verläuft, wobei die Strömung im Wesentlichen parallel zu den Heizelementen strömt.

Beim Ausführungsbeispiel der Figur 7 sind die Heizelemente 9 im Wesentlichen quer zur Strömungsrichtung S zwischen Fluideinlass 3 und Fluidauslass 4 angeordnet, so dass auch ein Fluidstrom im Wesentlichen senkrecht zu einer Ebene zwischen Fluideinlass und Fluidauslass erfolgt, also zwischen den Heizelementen 9, wobei das Fluid dabei zumindest zweifach umgelenkt wird, um ausgehend vom Fluideinlass 3 umgelenkt zu werden, anschließend zwischen den Heizelementen 9 quer durchzuströmen um anschließend wieder zum Fluidauslass 4 umgelenkt zu werden.

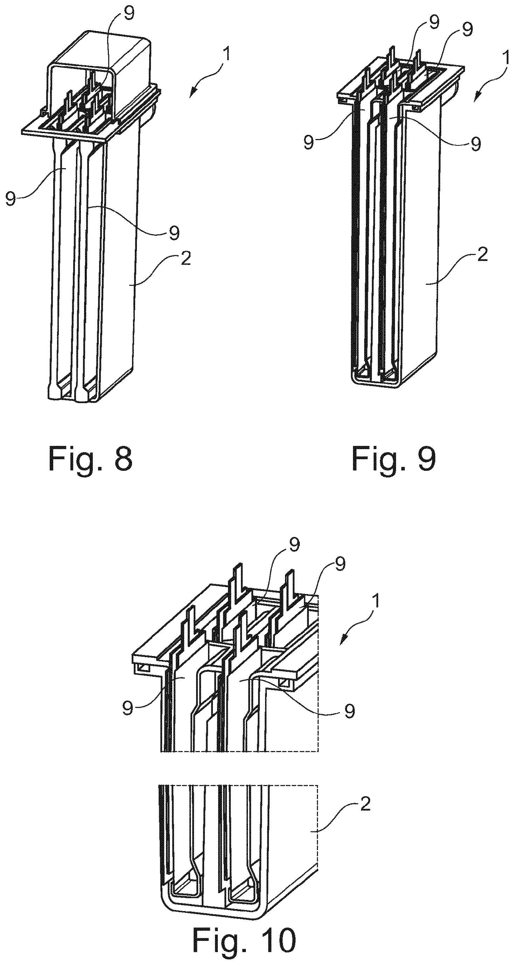

Die Figuren 8 bis 10 zeigen ein Ausführungsbeispiel, bei dem die Heizelemente 9 in zwei Reihen quer zur Strömungsrichtung betrachtet und in zumindest zwei Spalten in Strömungsrichtung nacheinander angeordnet sind, so dass insgesamt zumindest vier oder mehr Heizelemente 9 angeordnet sind. Die Heizelemente 9 sind innerhalb des Gehäuses 2, also in zwei Reihen, angeordnet, wobei in einer Reihe zumindest zwei oder mehr Heizelemente 9 angeordnet sein können. Beispielsweise kann gemäß Figur 2 auch eine Mehrzahl von Heizelementen 9 in einer Reihe nacheinander angeordnet sein.

Die Figuren 11 bis 13 zeigen Details von Heizelementgehäusen 11 gemäß Figur 3. Die Heizelementgehäuse 11 sind entsprechend aus zwei Schalen 52, 53 gebildet, wobei gemäß Figur 11 die elektrische Isolierung 57 als Formteil ausgebildet ist, das die Kontaktelemente 55 und die Heizmittel 56 nahezu vollständig umschließt, wobei bevorzugt ein Formteil oder zwei Formteile als elektrische Isolierung 57 vorgesehen sein können.

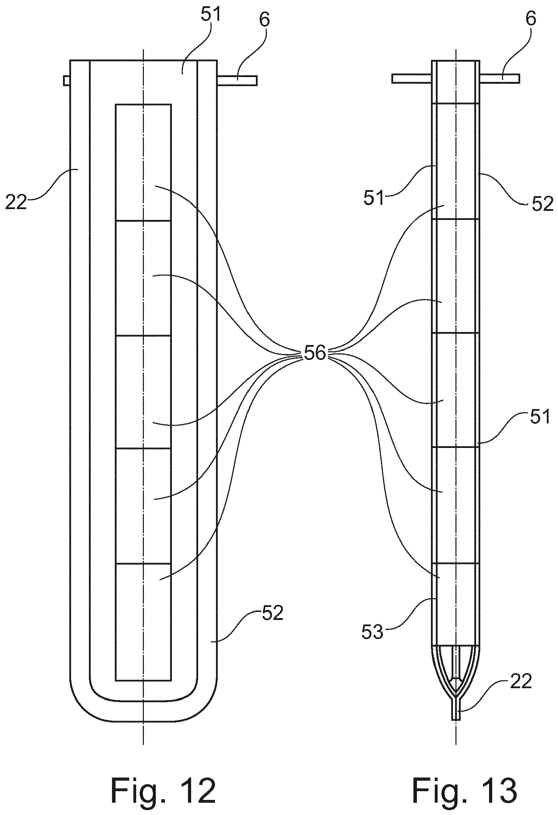

In den Figuren 12 und 13 ist zu erkennen, dass die Halbschalen 52, 53 einen aneinander liegenden Rand 22 aufweisen, welcher dem Verbinden der Halbschalen 52, 53 dient, beispielsweise durch Löten, Schweißen und/oder Kleben. Die Halbschalen 52, 53 sind mit dem Boden 6 ebenfalls durch thermisches Fügen, beispielsweise durch Löten, Schweißen und/oder Kleben verbunden.

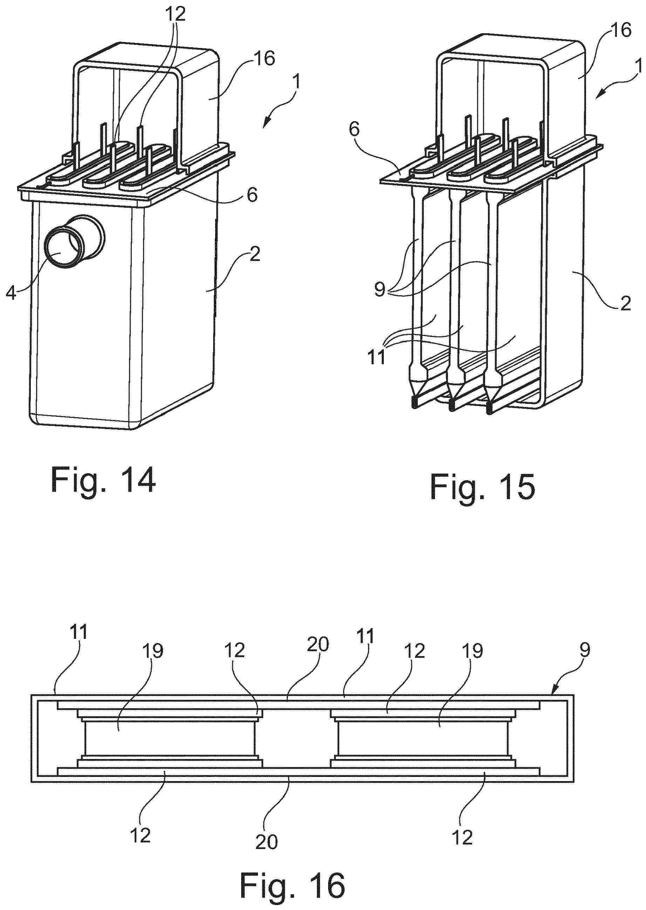

Die Figuren 14 bis 16 zeigen ein weiteres Ausführungsbeispiel einer elektrischen Heizeinrichtung 1, bei welchen in den Heizelementen 9 in Längsrichtung des Heizelementgehäuses 11 mehrere Reihen von Heizmitteln 19 angeordnet sind, wobei die Heizmittel 19 über Kontaktelemente 12 miteinander elektrisch kontaktiert sind. Dabei können die Kontaktelemente 12 für eine Reihe von Heizmitteln 19 vorgesehen sein, wobei die elektrische Isolierung 20 die jeweiligen Kontaktelemente 12 gegenüber dem Heizelementgehäuse 11 elektrisch isoliert. Dabei sind bevorzugt wenige größere Heizelemente 9 vorgesehen, die beispielsweise ein- bis dreistufig angeordnet sind.

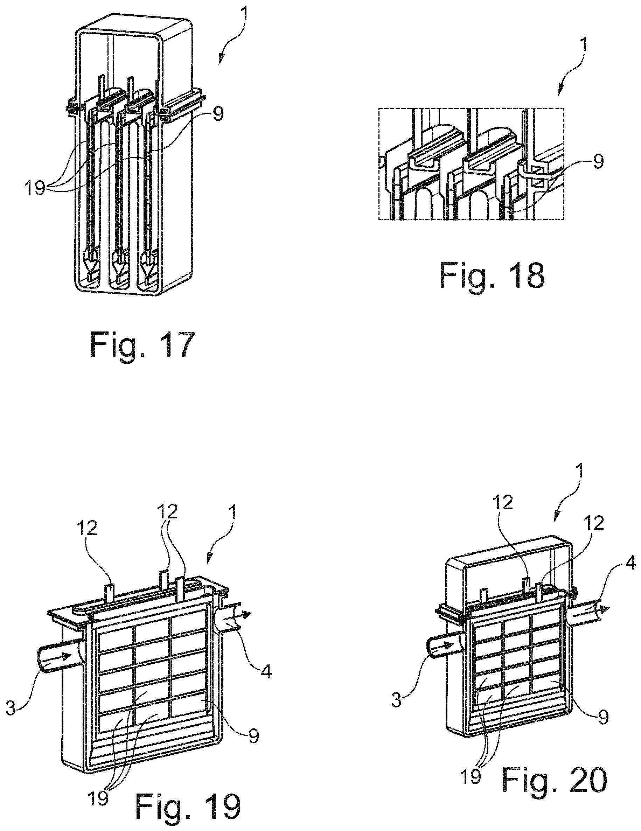

Die Figuren 17 bis 19 zeigen entsprechende Darstellungen von Heizeinrichtungen 1, bei welchen Heizelemente 9 mit einer Mehrzahl von Heizmitteln 19 vorgesehen sind. So zeigen die Figuren 19 und 20, dass innerhalb eines Heizelements 9 beispielsweise drei Spalten mit fünf Zeilen von Heizmitteln 19 angeordnet sind. Diese können beispielsweise spaltenweise oder gesamthaft von einzelnen oder flächigen Kontaktelementen 12 kontaktiert werden, so dass beispielsweise nur 1, 2 oder 3 oder eine geringe Anzahl solcher flächiger Heizelemente benachbart nebeneinander angeordnet sind, insbesondere zwischen Fluideinlass 3 und Fluidauslass 4. Damit die Heizmittel 19 derart geometrisch angeordnet sind, können Hilfsrahmen vorgesehen sein, welche die Heizmittel 19 im Heizelementgehäuse 11 positionieren. Auch sind andere geometrische Anordnungen von Heizmitteln in dem Heizelementgehäuse möglich. Solche geometrischen Anordnungen erlauben die flächige gleichmäßige Verteilung der Heizmittel 19 im Heizelementgehäuse 11, so dass eine gleichmäßige Erwärmung des Heizelementgehäuses 11 resultiert, insbesondere bei ausgedehnteren, flächigeren Heizelementen.

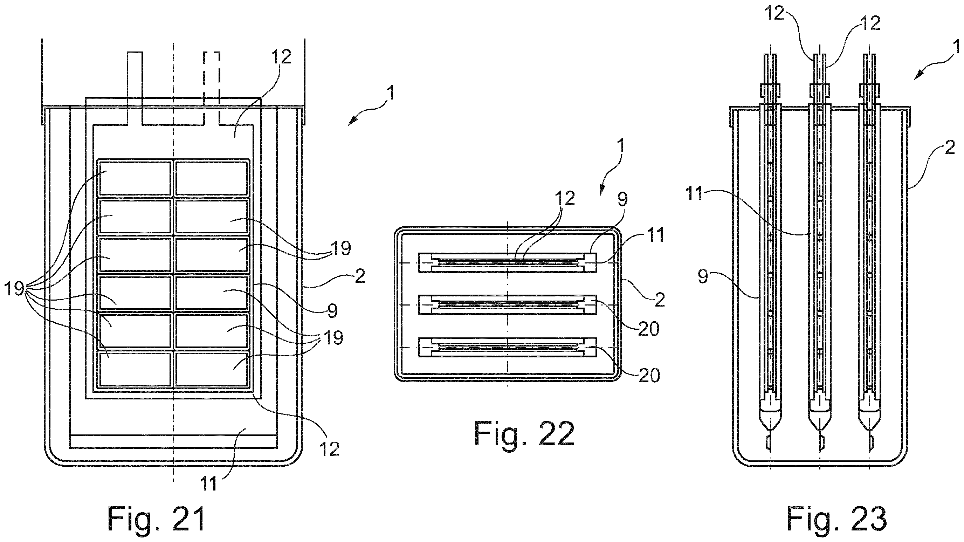

Die Figuren 21 bis 23 zeigen alternative Heizeinrichtungen 1, bei welchen drei Heizelemente benachbart zueinander angeordnet sind, wobei in jedem Heizelement zwei Spalten mit sechs Zeilen von Heizmitteln 19 angeordnet sind. Dabei sind die Heizmittel 19 eines Heizelements 9 von flächigen Kontaktelementen 12 jeweils auf einer Seite kontaktiert, so dass die Heizelemente als Ganzes jeweils ansteuerbar sind.

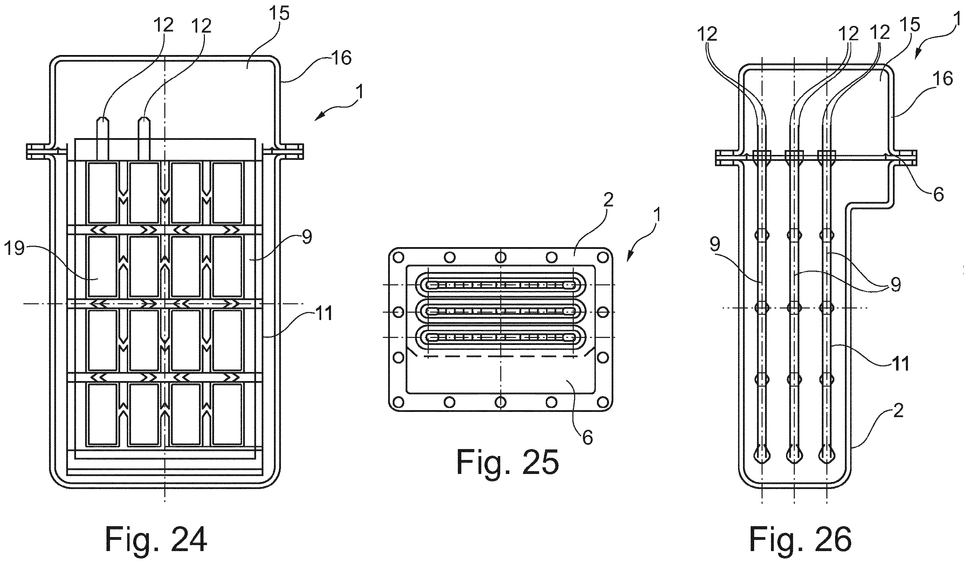

Die Figuren 24 bis 26 zeigen eine elektrische Heizeinrichtung 1 mit einer elektronischen Steuereinheit 15, welche die Kontaktelemente 12 kontaktiert zur Ansteuerung der Heizmittel 19 zum Aufheizen eines durchströmenden Fluids. Dabei sind die Heizmittel 19 in Zeilen und Spalten innerhalb eines Heizelements 9 angeordnet, wobei drei Heizelemente 9 nebeneinander benachbart zueinander angeordnet sind. Je nach Anordnung und Ausgestaltung der Kontaktelemente 12 und der Heizmittel 19 kann das jeweilige Heizelement 9 als Ganzes ein- oder ausschaltbar oder in der Wärmeabgabe ansteuerbar sein oder innerhalb eines Heizelements 9 können verschiedene Gruppen von Heizmitteln 19 miteinander verschaltet sein, um eine feinere Ansteuerung innerhalb eines jeweiligen Heizelements 9 bewirken zu können. So kann beispielsweise jede Spalte von Heizmitteln 19 individuell ansteuerbar sein.

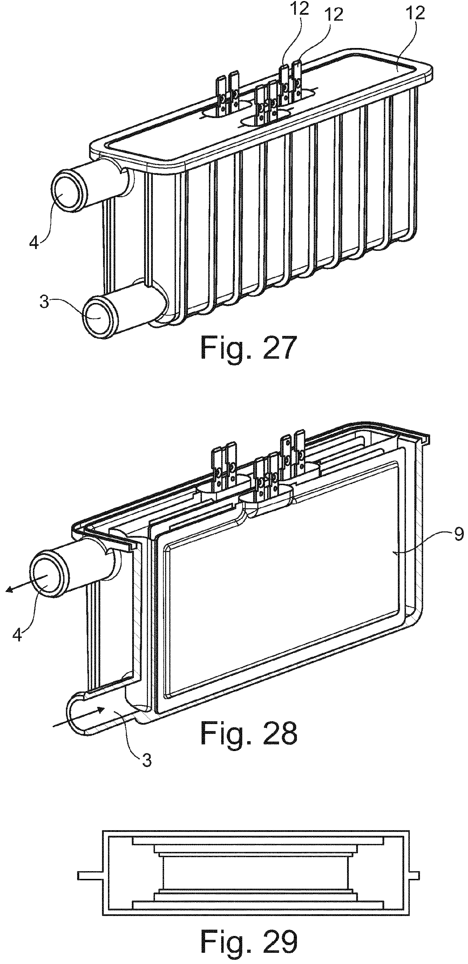

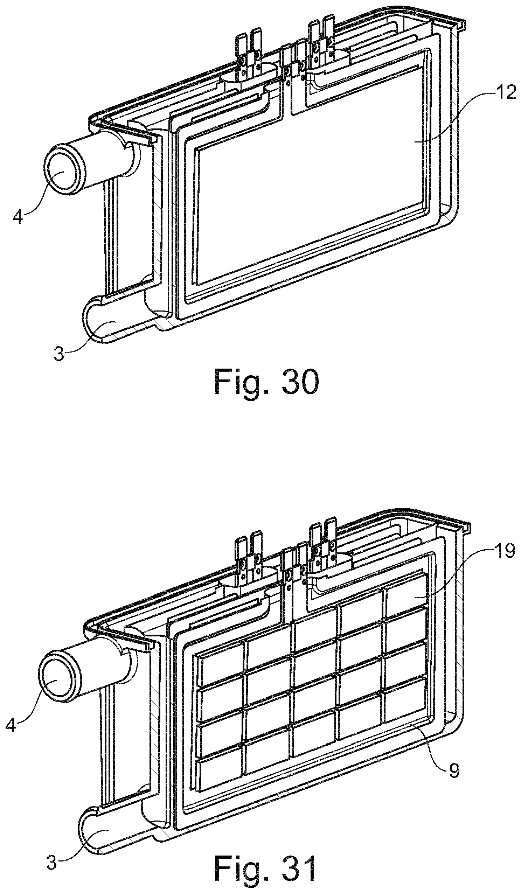

Die Figuren 27 bis 31 zeigen Ausführungen entsprechend Figur 5, wobei die Heizmittel 19 gemäß Figur 31 in Zeilen und Spalten angeordnet sind, wobei die Kontaktelemente 12 gemäß Figur 30 flächige Elemente sind, die sämtliche Heizmittel 19 eines Heizelements 9 kontaktieren. Entsprechend können die Heizmittel 19 eines Heizelements 9 über die Ansteuerung der beiden gegenüberliegenden Kontaktelemente 12 gemeinsam angesteuert werden. Bei der Anordnung dreier solcher Heizelemente 9 kann eine entsprechende Ansteuerung der elektrischen Heizeinrichtung erreicht werden.

Gemäß der Erfindung ist es besonders vorteilhaft, wenn die Heizeinrichtung und/oder die Heizelemente in sich dicht geschlossen bzw. gekapselt ist bzw. sind. Dabei kann ein thermisches Fügeverfahren der Heizeinrichtung und/oder der Heizelemente eingesetzt werden.

Die Heizmittel können als PTC-Elemente ausgebildet sein. Alternativ können Elemente ohne PTC-Effekt verwendet werden.

Die Heizmittel werden vorzugsweise über zwei Kontaktelemente als Kontaktelektroden bestromt. Die Heizmittel sind also zwischen zwei Kontaktelementen, wie Kontaktelektroden, angeordnet.

Anstatt der Heizmittel 19, die zwischen zwei blechartigen Kontaktelementen angeordnet sind, könnte auch beispielsweise ein Heizmittel, beispielsweise als Heizkeramik verwendet werden, das mit aufgebrachter und/oder aufgedruckter Widerstandsbahn oder Widerstandsbahnen versehen ist. Diese Widerstandsbahn würde dann elektrisch angeschlossen werden, um einen Stromfluss zu erreichen. Die Widerstandsbahn würde als Kontaktelemente fungieren. In dem Falle würden keine blechartigen Kontaktelemente verwendet werden, sondern ein Trägermaterial beispielsweise aus Isolationskeramik und/oder Aluminiumoxid mit guter Wärmeleitfähigkeit wird mit aufgebrachten Widerstandsbahnen als Kontaktelemente versehen und kontaktiert. Der Strom fließt dann gegebenenfalls nicht über den kurzen Weg von Kontaktelement zu Kontaktelement, sondern den langen Weg über die Länge der aufgebrachten Widerstandsbahn.

Die Heizeinrichtung ist bevorzugt für Hochvoltanwendungen verwendbar.

Alternativ zur Gestaltung des Heizelementgehäuses 11 durch zwei Halbschalen 52, 53 kann auch eine Wanne mit einem im Wesentlichen ebenen Deckel vorgesehen sein.

Die elektrische Kontaktierung der Heizelemente erfolgt in der Regel senkrecht zur Strömungsrichtung des zu erwärmenden Fluids.

Als elektrische Isolierung kann ein festes oder flexibles Material oder Element verwendet werden, wie ein Formelement oder eine Folie.

Im Gehäuse 2 ist auch zwischen den Heizelementen 9 und/oder zwischen den Heizelementen und dem Gehäuse 2 eine Anordnung von Turbulenzerzeugern zur Leistungssteigerung möglich.

Der Boden 6 zur Aufnahme und Anordnung der Heizelemente dient bei einem vorteilhaften Ausführungsbeispiel auch der direkten Kontaktierung der Steuereinheit mit einer Leistungselektronik. Der Boden 6 dient dem Abschluss des Gehäuses 2.

Der Boden 6 dient der Befestigung und Abdichtung der Steuereinheit bzw. der Leistungselektronik und zur Abdichtung des fluiddurchströmten Gehäuses 2.

Die nominale elektrische Leistung der Heizeinrichtung 1 kann im Bereich von 3 kW bis etwa 9 kW, vorzugsweise bei etwa 5 kW liegen.

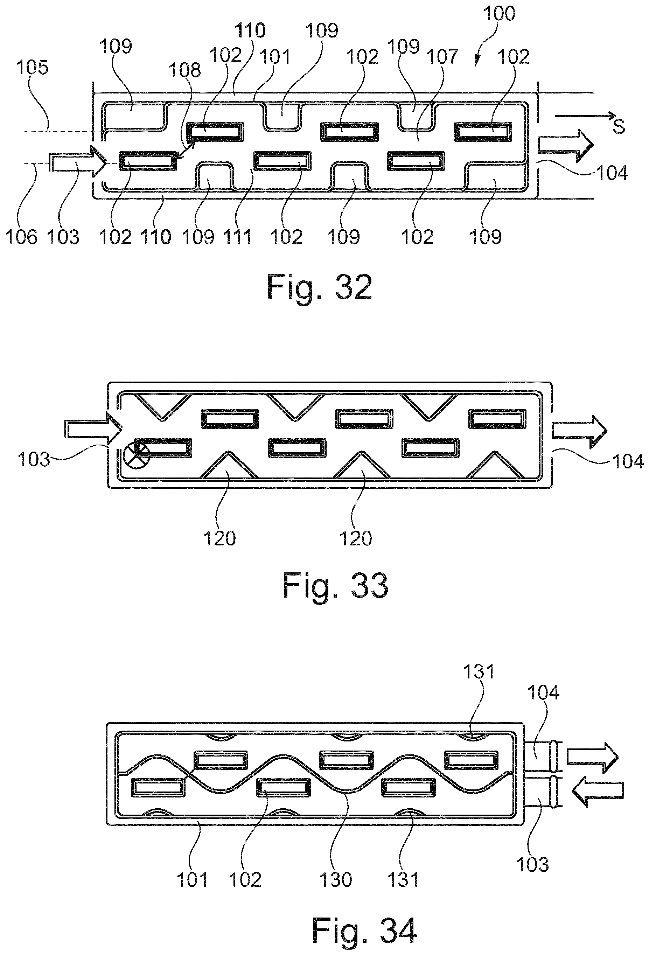

Die Figur 32 zeigt eine Ansicht eines Schnitts durch eine erfindungsgemäße Heizeinrichtung 100. Die Heizeinrichtung weist in einem Gehäuse 101 angeordnete Heizelemente 102 auf. Das Gehäuse weist einen Fluideinlass 103 und einen Fluidauslass 104 auf, so dass beim Fluideinlass 103 ein Fluid in das Gehäuse der Heizeinrichtung 100 einströmen kann, welches das Gehäuse 101 durchströmt. Anschließend strömt das Fluid beim Fluidauslass 104 wieder aus dem Gehäuse 101 aus.

Die Heizelemente 102 sind in dem Gehäuse 101 in zwei Reihen 105, 106 angeordnet, wobei die Reihen 105, 106 lateral versetzt zueinander angeordnet sind. in Strömungsrichtung S des Fluids betrachtet sind die Heizelemente 102 der Reihen 105, 106 versetzt zueinander angeordnet, so dass jeweils jedes zweite Heizelement 102 in der Reihe 105 bzw. in der Reihe 106 angeordnet ist.

Die elektrische Heizeinrichtung 100 mit dem Gehäuse 101 mit dem Fluideinlass 103 und mit dem Fluidauslass 104 ist dabei derart aufgebaut, dass das Gehäuse 101 von dem Fluid durchströmbar ist. Dabei ragt eine Anzahl von Heizelementen 102 in den Innenraum 107 des Gehäuses 101.

Die Heizelemente 102 weisen dabei auch ein Heizelementgehäuse auf, wobei ein Heizelement 102 in dem Heizelementgehäuse zumindest ein Heizmittel und das zumindest eine Heizmittel kontaktierende Kontaktelemente und eine elektrische Isolierung zur Isolierung der Kontaktelemente gegenüber dem Heizelementgehäuse aufweist.

Die Kontaktelemente ragen auch aus dem Heizelement heraus.

Wie auch bei den vorhergehend beschriebenen Ausführungsbeispielen sind die Heizelemente 102 mit ihrem Heizelementgehäuse mit dem Gehäuse 101 abdichtend verbunden.

Die Heizelemente 102 sind dabei derart angeordnet, dass sie in der Strömungsrichtung S des Fluids vom Fluideinlass 103 zum Fluidauslass 104 beidseitig von dem Fluid umströmbar sind.

Die Heizelemente 102 sind in der Strömungsrichtung des Fluids betrachtet hintereinander und lateral versetzt zueinander angeordnet.

Zwischen aufeinanderfolgenden Heizelementen 102 ist jeweils ein Abstand 108 angeordnet bzw. ausgebildet, so dass das Fluid zwischen den Heizelementen auch quer zur Strömungsrichtung S strömen kann und ein Fluidaustausch stattfinden kann.

Die Figur 32 zeigt auch, dass von dem Gehäuse 101 ausgehend in den Innenraum 107 des Gehäuses 101 Strömungslenkungselemente 109 hineinragen, welche die Strömung des Fluids beeinflussen. Dabei sind die Strömungslenkungselemente 109 etwa auf der Höhe der Heizelemente 102 angeordnet und benachbart zu diesen, wobei die Strömungslenkungselemente abwechselnd an der einen oder an der gegenüberliegenden Seitenwand 110 des Gehäuses 101 angeordnet sind.

Dadurch wird der Fluidpfad 111 des Fluids lokal verengt, so dass das Fluid auf Höhe des Heizelemente 102 beiderseits den etwa gleichen Querschnitt zur Verfügung hat und das Fluid so zu dem Heizelement 102 gelenkt wird und an diesem vorbei strömen kann.

Die Strömungslenkungselemente 109 sind im Ausführungsbeispiel der Figur 32 als rechteckige Strukturen ausgebildet, die beispielsweise als Bleche oder Schalenelemente ausgebildet sind und mit den Seitenwänden 110 verbunden sind. In den Eckbereichen des Gehäuses sind dabei ebenso entsprechende etwa rechteckige Strömungslenkungselemente 109 ausgebildet.

Man erkennt, dass der Fluidpfad 111 etwa mäanderförmig oder schlangenlinienförmig ausgebildet ist.

Im Ausführungsbeispiel der Figur 33 sind die Strömungslenkungselemente 120 dreieckig ausgebildet.

Man erkennt in den Figuren 32 und 33, dass die Durchströmung des Gehäuses 101 in einem Durchgang, also als I-Flow, erfolgt.

Die Figur 34 zeigt ein weiteres Ausführungsbeispiel, bei welchem im Vergleich zu den Figuren 32 und 33 mittig eine s-förmige Trennwand angeordnet ist, welche sich zwischen den Heizelementen 102 entlang schlängelt, so dass eine Durchströmung des Gehäuses 101 mit einer Umlenkung resultiert, also ein U-Flow vorliegt. Das Fluid strömt vom Fluideinlass 103 durch die erste Hälfte des Gehäuses 101, wird dann umgelenkt und strömt dann wieder zum Fluidauslass 104 zurück.

Im Ausführungsbeispiel der Figur 34 sind die Strömungslenkungselemente 131 bogenförmig ausgebildet.

In den Ausführungsbeispielen der Figuren 32 bis 34 ist ein Strömungslenkungselement 109, 120, 131 jeweils benachbart zu einem Heizelement 102 angeordnet und reduziert den Strömungsquerschnitt für das Fluid benachbart zu dem Heizelement 102.

In den Figuren 32 bis 34 ist auch zu erkennen, dass die Heizelemente eine Erstreckung in Strömungsrichtung aufweisen, die größer ist als eine Erstreckung quer zur Strömungsrichtung, betrachtet in einer Ebene parallel zu der Wandung mit den Öffnungen, in welche die Heizelemente eingesetzt sind. Diese Ebene der Wandung liegt damit quasi parallel zu der gezeigten Schnittebene. Die Heizelemente sind somit in Strömungsrichtung S länglich ausgebildet bzw. in Strömungsrichtung S orientiert und damit länger als quer zur Strömungsrichtung S.

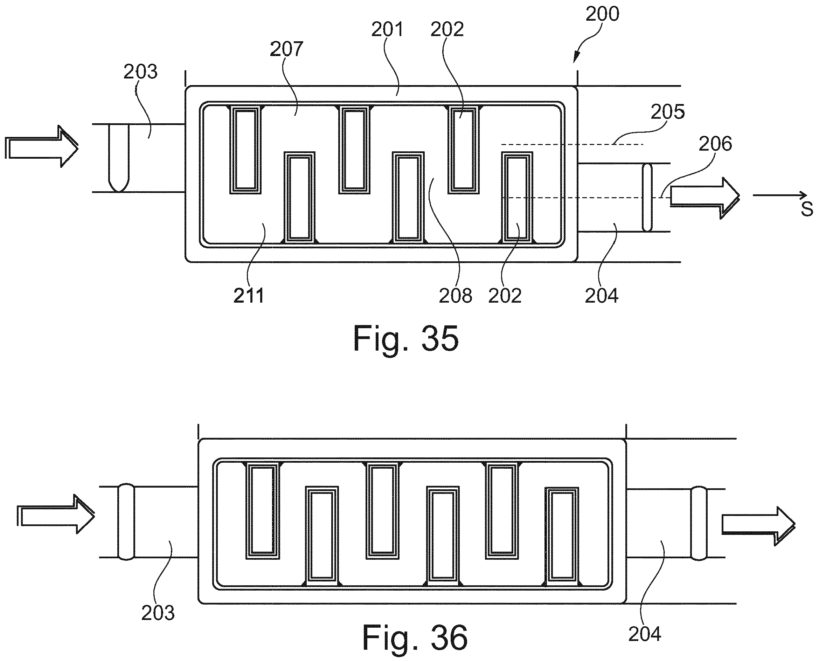

Die Figur 35 zeigt eine Ansicht eines Schnitts durch eine erfindungsgemäße Heizeinrichtung 200. Die Heizeinrichtung weist in einem Gehäuse 201 angeordnete Heizelemente 202 auf. Das Gehäuse 201 weist einen Fluideinlass 203 und einen Fluidauslass 204 auf, so dass beim Fluideinlass 203 ein Fluid in das Gehäuse 201 der Heizeinrichtung 200 einströmen kann, welches das Gehäuse 201 durchströmt. Anschließend strömt das Fluid beim Fluidauslass 204 wieder aus dem Gehäuse 201 aus. Der Fluideinlass 203 und der Fluidauslass 204 sind auf gegenüberliegenden Seiten des Gehäuses und lateral versetzt zueinander angeordnet.

Die Heizelemente 202 sind in dem Gehäuse 201 in zwei Reihen 205, 206 angeordnet, wobei die Reihen 205, 206 lateral versetzt zueinander angeordnet sind. In Strömungsrichtung S des Fluids betrachtet sind die Heizelemente 202 der Reihen 205, 206 versetzt zueinander angeordnet, so dass jeweils jedes zweite Heizelement 202 in der Reihe 205 bzw. in der Reihe 206 angeordnet ist.

Die elektrische Heizeinrichtung 200 mit dem Gehäuse 201 mit dem Fluideinlass 203 und mit dem Fluidauslass 204 ist dabei derart aufgebaut, dass das Gehäuse 201 von dem Fluid durchströmbar ist. Dabei ragt eine Anzahl von Heizelementen 202 in den Innenraum 207 des Gehäuses 201, wie dies auch schon oben beschrieben ist.

Die Heizelemente 202 weisen dabei auch ein Heizelementgehäuse auf, wobei ein Heizelement 202 in dem Heizelementgehäuse zumindest ein Heizmittel und das zumindest eine Heizmittel kontaktierende Kontaktelemente und eine elektrische Isolierung zur Isolierung der Kontaktelemente gegenüber dem Heizelementgehäuse aufweist. Die Kontaktelemente ragen auch aus dem Heizelement heraus. Wie auch bei den vorhergehend beschriebenen Ausführungsbeispielen sind die Heizelemente 202 mit ihrem Heizelementgehäuse mit dem Gehäuse 201 abdichtend verbunden.

Die Heizelemente 202 sind dabei derart angeordnet, dass sie in der Strömungsrichtung S des Fluids vom Fluideinlass 203 zum Fluidauslass 204 nur einseitig von dem Fluid umströmbar sind. Dies bedeutet, dass die Heizelemente an einer Seitenwand 209 des Gehäuses 201 anliegen und nur an der nicht anliegenden Seite des Heizelements 202 umströmt werden.

Die Heizelemente 202 sind in der Strömungsrichtung S des Fluids betrachtet hintereinander und lateral versetzt zueinander angeordnet.

Zwischen aufeinanderfolgenden Heizelementen 202 ist jeweils ein Abstand 208 angeordnet bzw. ausgebildet, so dass das Fluid zwischen den Heizelementen 202 auch quer zur Strömungsrichtung S strömen kann und so ein Zick-Zack-förmiger Fluidpfad 211 resultiert.

Man erkennt, dass der Fluidpfad 211 etwa schlangenlinienförmig ausgebildet ist.

Im Ausführungsbeispiel der Figur 36 sind der Fluideinlass 203 und der Fluidauslass 204 auf einer Linie liegend ausgerichtet und nicht lateral versetzt zueinander angeordnet.

Die Figuren 35 und 36 zeigen auch, dass die Heizelemente 202 jeweils an einer Seitenwand 209 des Gehäuses 201 anliegen oder daran befestigt sind. Insbesondere sind die jeweiligen Heizelemente 202, insbesondere alternierend, an gegenüberliegenden Seitenwänden 209 des Gehäuses anliegend angeordnet oder sie sind daran befestigt. Dies erfolgt vorzugsweise durch thermisches Fügen, wie Schweißen, Löten oder Kleben.

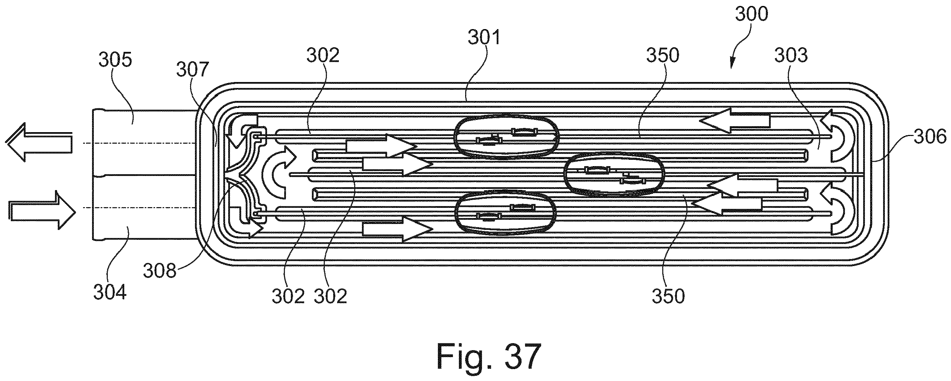

Die Figur 37 zeigt ein weiteres Ausführungsbeispiel einer elektrischen Heizeinrichtung 300, bei welcher drei Heizelemente 302 in dem Gehäuse 301 angeordnet sind. Die Heizelemente 302 sind dabei flächig ausgebildet und erstrecken sich in Strömungsrichtung S in etwa über die gesamte Länge des Innenraums 303 des Gehäuses 302. Es sind drei Heizelemente 302 angeordnet. Das mittlere Heizelement 302 ist an der dem Fluideinlass 304 und dem Fluidauslass 305 gegenüberliegenden Seitenwand 306 angeordnet und abgedichtet. Die beiden äußeren Heizelemente 302 sind gegenüber der Seitenwand 307 mit Fluideinlass 304 und Fluidauslass 305 mittels eines Fluidwandelements 308 angelenkt und abgedichtet. Dadurch entsteht ein mäanderförmiger Fluidpfad vom Fluideinlass 304 hin zum Fluidauslass 305.

Die Heizelemente 302 sind dabei flächig ausgebildet und nehmen nahezu den gesamten Querschnitt des Innenraums des Gehäuses 303 in ihrer Ebene ein und bilden selbst ein Fluidleitelement.

Dabei ist es auch vorteilhaft, wenn im Innenraum des Gehäuses zumindest eine Trennwand angeordnet ist, welche den Innenraum des Gehäuses in mehrere Fluidpfade unterteilt, die von dem Fluid seriell durchströmt werden.

Dabei ist es auch vorteilhaft, wenn im Innenraum des Gehäuses die Heizelemente derart angeordnet sind, dass sie den Innenraum des Gehäuses in mehrere Fluidpfade unterteilen, die von dem Fluid seriell durchströmt werden.

Ebenso ist es zweckmäßig, wenn die Heizelemente derart angeordnet sind, dass zumindest einzelne Heizelemente in zumindest einem der Fluidpfade oder zumindest einzelne Heizelemente in jedem der Fluidpfade angeordnet sind bzw. die Fluidpfade an zumindest einem der Heizelemente vorbei geführt sind.

Im Gehäuse sind vorteilhaft Nuten ausgespart. In diese Nuten ist der Rand der Halbschalen eines Heizelements angeordnet und befestigt. So ergibt sich auch eine gerichtete Strömungsführung des zu erwärmenden Fluids.

Bei drei Heizelementen kann somit die Strömung in vier Fluidpfade aufgeteilt werden. Gehäusezwischenwände 350 dienen zur Strömungsführung und Erhöhung der Strömungsgeschwindigkeit und zur Leistungssteigerung.

Alternativ zu den Gehäusezwischenwänden 350 bzw. zusätzlich zu diesen können auch zusätzliche Maßnahmen zur verbesserten Strömungsturbulenz und damit Leistungssteigerung eingebracht werden, wie beispielsweise Noppen, Rippen oder Turbulenzeinlagen.

Gemäß Figur 37 ergibt sich somit eine vierflutige Ausführung. Das Fluid wird dreifach um 180° umgelenkt. Jedes Heizelement 302 wird auf den zwei, dem Fluid zugeordneten Seiten, in unterschiedlichen Richtungen vom Fluid umströmt.

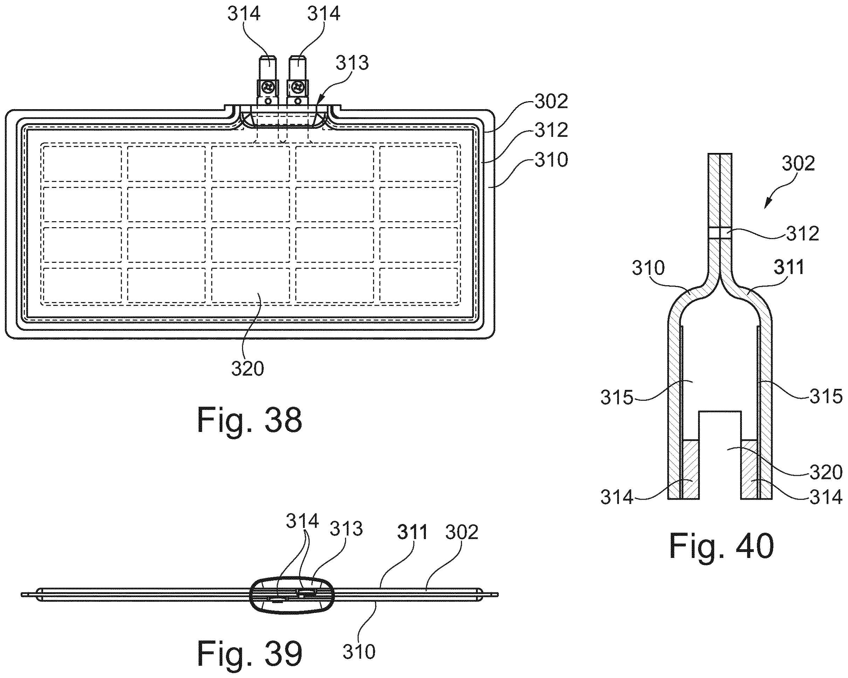

Die Figuren 38 bis 40 zeigen ein Heizelement 302 bzw. Details davon, wie es im Ausführungsbeispiel der Figur 37 eingesetzt ist.

Die Figur 38 zeigt eine Seitenansicht eines Heizelements 302, das zwei Halbschalen 310, 311 aufweist, die miteinander verschweißt sind. Alternativ können die Halbschalen 310, 311 auch miteinander verlötet oder verklebt sein. Man erkennt in den Figuren 38 und 40 die Schweißnaht 312, die nahezu umlaufend angeordnet ist. Dabei lässt die Schweißnaht 312 den Durchgang 313 zur Durchführung der Kontaktelemente 314 aus, wobei der Durchgang 313 durch einen Einsatz oder durch eine Vergussmasse etc. verschlossen sein kann.

Das Heizelement 302 weist im Inneren eine Anordnung von Heizmitteln 320 auf, die durch die Kontaktelemente 314 kontaktiert sind und von einer elektrischen Isolierung 315 isoliert sind. Dabei kann die elektrische Isolierung 315 als Folie, als Formteil oder als Vergussmasse etc. ausgebildet sein. Alternativ kann auch die Innenseite der Halbschale mit einem elektrisch isolierenden Material beschichtet werden. Alternativ können auch die Kontaktelemente bzw. die Kontaktbleche/-elektroden auf der Außenseite mit einem elektrisch isolierenden Material beschichtet werden.

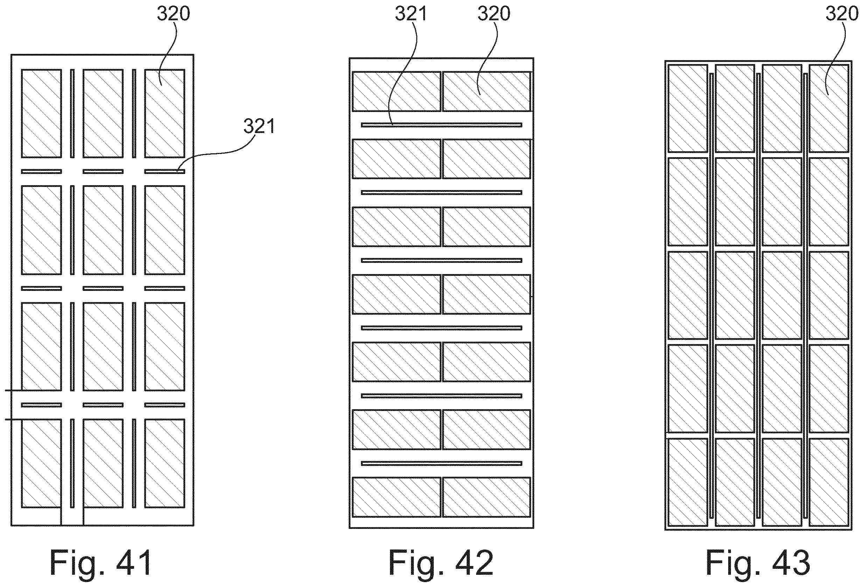

Die Figuren 38 und 41 bis 43 offenbaren verschiedene Anordnungen von Heizmitteln 320 eines Heizelements 302. Die Heizmittel 320 sind beispielsweise als PTC-Elemente ausgebildet. Die Heizmittel 320 sind in Zeilen und Spalten angeordnet. Gemäß der Figuren 38 und 43 sind vier mal fünf Heizelemente 320 angeordnet. In den Figuren 41 und 42 sind die Heizmittel 320 in Anordnungen drei mal vier bzw. zwei mal sieben angeordnet, wobei in Figur 41 Trennmittel 321 zum Trennen und Anordnungen der jeweiligen Heizmittel vorgesehen sind. Dazu sind die Trennmittel zwischen jeweils benachbarten Heizmitteln 320 vorgesehen. In Figur 42 sind die Heizmittel als Zweierreihen angeordnet, also immer zwei Heizmittel benachbart zueinander in einer Reihe, wobei solche Reihen von zwei Heizmitteln durch ein Trennmittel voneinander getrennt sind.

Gemäß der Erfindung können die Heizelemente in einer Strömungsrichtung des Fluids betrachtet in Reihen lateral nebeneinander angeordnet sein, so dass das Fluid zwischen den Reihen durchströmbar ist. Dabei können die Heizelemente einer Reihe oder in mehreren Reihen benachbart und vorzugsweise nebeneinander in Strömungsrichtung nacheinander angeordnet sein. Auch können die Heizelemente einer Reihe in Strömungsrichtung nach einander und mit einem Abstand zueinander angeordnet sein.

Die Strömungsführung in dem Gehäuse kann einflutig, ohne Umlenkung, zweiflutig, also mit einer Umlenkung, oder dreiflutig oder vierflutig oder auch mehrflutig sein. Die ein-, zwei- oder mehrflutige fluidseitige Durchströmung erfolgt in der Regel in einer Ebene, könnte aber auch in einer zweiten Ebene erfolgen. Das heißt, dass die Umlenkung des Fluids in einer dritten Ebene erfolgt.

Die Heizelemente können längs oder auch quer zur Fluidströmungsführung angeordnet sein. Vorteilhaft wird jedes Heizelement von beiden Seiten von Fluid umströmt. Alternativ kann das Fluid aber auch nur an einer Seite vorbei strömen.

Die Figuren 38 bis 43 zeigen Anordnungen von Heizmitteln. Alternativ dazu können die Heizmittel auch unterschiedlich beabstandet werden. Durch eine größere Beabstandung der Heizmittel kann eine thermische Beeinflussung der Heizmittel zueinander reduziert werden. Der größere Abstand der Heizmittel zueinander verhindert, dass die Heizmittel sich gegenseitig thermisch beeinflussen und evtl. sich abregeln, wenn PTC-Elemente verwendet sind.

## Patentansprüche

1. Elektrische Heizeinrichtung (1, 100, 200, 300) mit einem Gehäuse (2, 101, 201, 301, 303) mit einem Fluideinlass (3, 103, 203, 304) und mit einem Fluidauslass (4, 104, 204, 305), wobei das Gehäuse (2, 101, 201, 301, 303) von einem Fluid durchströmbar ist und wobei eine Anzahl von Heizelementen (9, 50, 102, 202, 302) in den Innenraum (13, 107, 207) des Gehäuses (2, 101, 201, 301, 303) ragt, wobei die Heizelemente (9, 50, 102, 202, 302) ein Heizelementgehäuse (11, 51) aufweisen und wobei ein Heizelement (9, 50, 102, 202, 302) in dem Heizelementgehäuse (11, 51) zumindest ein Heizmittel (19, 56, 320) und das zumindest eine Heizmittel (19, 56, 320) kontaktierende Kontaktelemente (12, 55, 314) und eine elektrische Isolierung (20, 57, 315) zur Isolierung der Kontaktelemente (12, 55, 314) gegenüber dem Heizelementgehäuse (11, 51) aufweist, wobei die Kontaktelemente (12, 55, 314) aus dem Heizelement (9, 50, 102, 202, 302) herausragen und wobei die Heizelemente (9, 50, 102, 202, 302) mit ihrem Heizelementgehäuse (11, 51) mit dem Gehäuse (2, 101, 201, 301, 303) abdichtend verbunden sind, wobei die Heizelemente (9, 50, 102, 202, 302) derart angeordnet sind, dass sie in einer Strömungsrichtung des Fluids vom Fluideinlass (3, 103, 203, 304) zum Fluidauslass (4, 104, 204, 305) einseitig oder beidseitig von dem Fluid umströmbar sind.

2. Elektrische Heizeinrichtung (1, 100, 200, 300) nach Anspruch 1, **dadurch gekennzeichnet, dass** die Heizelemente (9, 50, 102, 202, 302) in einer Strömungsrichtung des Fluids betrachtet hintereinander und lateral versetzt zueinander angeordnet sind.

3. Elektrische Heizeinrichtung (1, 100, 200, 300) nach Anspruch 1, **dadurch gekennzeichnet, dass** die Heizelemente (9, 50, 102, 202, 302) in Strömungsrichtung des Fluids betrachtet in zumindest einer Reihe (105, 106, 205, 206) oder in mehreren Reihen (105, 106, 205, 206) hintereinander und lateral versetzt zueinander angeordnet sind.

4. Elektrische Heizeinrichtung (1, 100, 200, 300) nach Anspruch 2 oder 3, **dadurch gekennzeichnet, dass** von dem Gehäuse (2, 101, 201, 301, 303) ausgehend in den Innenraum (13,107, 207) des Gehäuses (2, 101, 201, 301, 303) Strömungslenkungselemente (109, 120, 131) hineinragen oder im Innenraum (13, 107, 207) des Gehäuses (2, 101, 201, 301, 303) Strömungslenkungselemente (109, 120, 131) angeordnet sind, welche die Strömung des Fluids beeinflussen, insbesondere welche die Strömung des Fluids hin zu den lateral versetzten Heizelementen (9, 50, 102, 202, 302) lenken.

5. Elektrische Heizeinrichtung (1, 100, 200, 300) nach Anspruch 4, **dadurch gekennzeichnet, dass** ein Strömungslenkungselement (109, 120, 131) jeweils benachbart zu einem Heizelement (9, 50, 102, 202, 302) angeordnet ist und den Strömungsquerschnitt für das Fluid benachbart zu dem Heizelement (9, 50, 102, 202, 302) reduziert.

6. Elektrische Heizeinrichtung (1, 100, 200, 300) nach Anspruch 1, **dadurch gekennzeichnet, dass** die Heizelemente (9, 50, 102, 202, 302) in einer Strömungsrichtung des Fluids betrachtet in Reihen (105, 106, 205, 206) lateral nebeneinander angeordnet sind, so dass das Fluid zwischen den Reihen (105, 106, 205, 206) durchströmbar ist.

7. Elektrische Heizeinrichtung (1, 100, 200, 300) nach Anspruch 6, **dadurch gekennzeichnet, dass** die Heizelemente (9, 50, 102, 202, 302) einer Reihe (105, 106, 205, 206) oder in mehreren Reihen (105, 106, 205, 206) benachbart und vorzugsweise nebeneinander in Strömungsrichtung nacheinander angeordnet sind.

8. Elektrische Heizeinrichtung (1, 100, 200, 300) nach Anspruch 6 oder 7, **dadurch gekennzeichnet, dass** die Heizelemente (9, 50, 102, 202, 302) einer Reihe (105, 106, 205, 206) in Strömungsrichtung nacheinander und mit einem Abstand (108, 208) zueinander angeordnet sind.

9. Elektrische Heizeinrichtung (1, 100, 200, 300) nach einem der vorhergehenden Ansprüche, **dadurch gekennzeichnet, dass** die Heizelemente (9, 50, 102, 202, 302) eine Erstreckung in Strömungsrichtung aufweisen, die größer ist als eine Erstreckung quer zur Strömungsrichtung, betrachtet in einer Ebene parallel zu der Wandung mit den Öffnungen (10), in welche die Heizelemente (9, 50, 102, 202, 302) eingesetzt sind.

10. Elektrische Heizeinrichtung (1, 100, 200, 300) nach einem der vorhergehenden Ansprüche, **dadurch gekennzeichnet, dass** die Heizelemente (9, 50, 102, 202, 302) eine Erstreckung in Strömungsrichtung aufweisen, die kleiner ist als eine Erstreckung quer zur Strömungsrichtung, betrachtet in einer Ebene parallel zu der Wandung mit den Öffnungen (10), in welche die Heizelemente (9, 50, 102, 202, 302) eingesetzt sind.

11. Elektrische Heizeinrichtung (1, 100, 200, 300) nach einem der vorhergehenden Ansprüche, **dadurch gekennzeichnet, dass** die Heizelemente (9, 50, 102, 202, 302) an einer Seitenwand (110, 209, 306, 307) des Gehäuses (2, 101, 201, 301, 303) anliegen oder daran befestigt sind.

12. Elektrische Heizeinrichtung (1, 100, 200, 300) nach einem der vorhergehenden Ansprüche, **dadurch gekennzeichnet, dass** jeweilige Heizelemente (9, 50, 102, 202, 302), insbesondere alternierend, an gegenüberliegenden Seitenwänden (110, 209, 306, 307) des Gehäuses (2, 101, 201, 301, 303) anliegen oder daran befestigt sind.

13. Elektrische Heizeinrichtung (1, 100, 200, 300) nach einem der vorhergehenden Ansprüche, **dadurch gekennzeichnet, dass** im Innenraum (13, 107, 207) des Gehäuses (2, 101, 201, 301, 303) zumindest eine Trennwand angeordnet ist, welche den Innenraum (13, 107, 207) des Gehäuses (2, 101, 201, 301, 303) in mehrere Fluldpfade (111, 211) unterteilt, die von dem Fluid seriell durchströmt werden.

14. Elektrische Heizeinrichtung (1, 100, 200, 300) nach einem der vorhergehenden Ansprüche, **dadurch gekennzeichnet, dass** im Innenraum (13, 107, 207) des Gehäuses (2, 101, 201, 301, 303) die Heizelemente (9, 50, 102, 202, 302) derart angeordnet sind, dass sie den Innenraum (13, 107, 207) des Gehäuses (2, 101, 201, 301, 303) in mehrere Fluidpfade (111, 211) unterteilen, die von dem Fluid seriell durchströmt werden.

15. Elektrische Heizeinrichtung (1, 100, 200, 300) nach einem der vorhergehenden Ansprüche 13 oder 14, **dadurch gekennzeichnet, dass** die Heizelemente (9, 50, 102, 202, 302) derart angeordnet sind, dass zumindest einzelne Heizelemente (9, 50, 102, 202, 302) in zumindest einem der Fluidpfade (111, 211) oder zumindest einzelne Heizelemente (9, 50, 102, 202, 302) in jedem der Fluidpfade (111, 211) angeordnet sind bzw. die Fluidpfade (111, 211) an zumindest einem der Heizelemente (9, 50, 102, 202, 302) vorbei geführt sind.
